Europäisches Patentamt

European Patent Office

Office européen des brevets

(19)

(11) EP 0 964 583 A2

(12) EUROPEAN PATENT APPLICATION

(43) Date of publication:
15.12.1999 Bulletin 1999/50

(51) Int Cl.⁶: H04N 7/50

(21) Application number: 99201845.7

(22) Date of filing: 01.06.1999

(84) Designated Contracting States:
AT BE CH CY DE DK ES FI FR GB GR IE IT LI LU MC NL PT SE
Designated Extension States:
AL LT LV MK RO SI

(30) Priority: 01.06.1998 US 98290

(71) Applicant: Texas Instruments Incorporated
Dallas, Texas 75251 (US)

(72) Inventors:
• Liang, Jie
  Plano Texas 75074 (US)
• Li, Stephen Hsiao-Yi
  Garland Texas 75040 (US)
• Talluri, Rajendra K.
  Piano Texas 75023 (US)
• Laczko, Frank L.
  Allen Texas 75013 (US)
• Chiang, Paul Y.
  Richardson Texas 75082 (US)

(74) Representative: Holt, Michael
  Texas Instruments Ltd.,
  800 Pavilion Drive,
  Northampton Business Park
  Northampton, Northamptonshire NN4 7YL (GB)

(54) Reduced resolution video decompression

(57) A method of image decoding of MPEG type signals with the predicated frame (P frame) macroblocks decoded at either full resolution or reduced resolution depending upon assessment of a macroblock. High energy or edge content macroblocks may be decoded at full resolution.

Fig. 30a

**Description**

BACKGROUND OF THE INVENTION

The invention relates to electronic image methods and devices, and, more particularly, to digital communication and storage systems with compressed images.

Video communication (television, teleconferencing, Internet, and so forth) typically transmits a stream of video frames (pictures, images) along with audio over a transmission channel for real time viewing and listening or storage. However, transmission channels frequently add corrupting noise and have limited bandwidth. Consequently, digital video transmission with compression enjoys widespread use. In particular, high definition television (HDTV) will use MPEG-2 type compression.

The MPEG bitstream for a 1920 by 1080 HDTV signal will contain audio plus video I frames, P frames, and B frames. Each I frame includes about 8000 macroblocks with each macroblock made of four 8x8 DCT (discrete cosine transform) luminance blocks and two 8x8 DCT chrominance (red and blue) blocks, although these chrominance blocks may be extended to 16x8 or even 16x16 in higher resolution. Each P frame has up to about 8000 motion vectors with half pixel resolution plus associated residual macroblocks with each macroblock in the form of four 8x8 DCT residual luminance blocks plus two 8x8 DCT chrominance residual blocks. Each B frame has up to about 8000 (pairs of) motion vectors plus associated residual macroblocks with each macroblock in the form of four 8x8 DCT luminance residual blocks plus two 8x8 DCT chrominance residual blocks.

The Federal Communications Commission (FCC) has announced plans for rolling out HDTV standards for the broadcasting industry which will use MPEG-2 coding. In order to maintain backward compatability with the millions of standard definition television (SDTV), an HDTV to SDTV transcoder has been pursued by several investigators. For example, USP 5,262,854 and USP 5,635,985 show conversion of HDTV type signals to low resolution. Transcoders essentially downsample by a factor of 4 (factor of 2 in each dimension) so the 1920 pixel by 1080 pixel HDTV frame becomes a 960 by 540 frame which approximates the 760 by 576 of standard TV. These published approaches include (1) decoding the HDTV signals from frequency domain to spatial domain and then downsampling in the spatial domain and (2) downsampling residuals in the frequency domain, scaling the motion vector, and then do motion compensation either in the downsampled domain or in the original HDTV domain. However, these transcoders have problems including computational complexity.

Digital TV systems typically have components for tuning/demodulation, forward error correction, depacketing, variable length decoding, decompression, image memory, and display/VCR. The decompression expected for HDTV essentially decodes an MPEG-2 type bitstream and may include other features such as downconversion for standard TV resolution or VHS recording.

A broadcast digital HDTV signal will be in the form a MPEG-2 compressed video and audio with error correction coding (e.g., Reed-Solomon) plus run length and variable length coding and in the form of modulation of a carrier in the TV channels. A set-top box front end could include a tuner, a phase-locked loop synthesizer, a quadrature demodulator, an analog-to-digital converter, a variable length decoder, and forward error correction. The MPEG-2 decoder includes inverse DCT and motion compensation plus downsampling if SDTV or other lower resolution is required. USP 5,635,985 illustrates decoders which include downsampling of HDTV to SDTV including a preparser which discards DCT coefficients to simplify the bitstream prior to decoding.

SUMMARY OF THE INVENTION

The present invention provides a downsampling for MPEG type bitstreams in the frequency domain and adaptive resolution motion compensation using analysis of macroblocks to selectively use higher resolution motion compensation to deter motion vector drift.

The present invention also provides video systems with the adaptive higher resolution decoding.

A preferred embodiment set-top box for HDTV to SDTV includes the demodulation (tuner, PLL synthesis, IQ demodulation, ADC, VLD, FEC) and MPEG-2 decoding of an incoming high resolution signal with the MPEG-2 decoding including the DCT domain downsampling.

BRIEF DESCRIPTION OF THE DRAWINGS

The drawings are schematic for clarity.

Figure 1 depicts a high level functional block diagram of a circuit that forms a portion of the audio-visual system of the present invention;
Figure 2 depicts a portion of Figure 1 and data flow between these portions;

Figure 3 shows the input timing;

Figure 4 shows the timing of the VARIS output;

Figure 5 shows the timing of 4:2:2 and 4:4:4 digital video output;

Figure 6 depicts the data output of PCMOUT alternates between the two channels, as designated by LRCLK;

Figure 7 shows an example circuit where maximum clock jitter will not exceed 200 ps RMS;

Figure 8 (read) and Figure 9 (write) show Extension Bus read and write timing, both with two programmable wait states;

Figure 10 shows the timing diagram of a read with EXTWAIT signal on;

Figure 11 depicts the connection between the circuitry, an external packetizer, Link layer, and Physical layer devices;

Figure 12 shows a functional block diagram of the data flow between the TPP, DES, and 1394 interface;

Figure 13 and Figure 14 depict the read and write timing relationships on the 1394 interface;

Figure 15 shows the data path of ARM processor core;

Figure 16 depicts the data flow managed by the Traffic Controller;

Figure 17 is an example circuit for the external VCXO;

Figure 18 shows the block diagram of the OSD module;

Figure 19 shows example displays of these two output channels;

Figure 20 show an example of the IR input bitstream;

Figure 21 shows a model of the hardware interface;

Figure 22 is a block diagram showing a transcoder and an SDTV decoder according to the present invention connected to a standard definition television set;

Figure 23A and 23B is a flow charting illustrating a transcoding process and a decoding process according to the present invention;

Figure 24 is an illustration of the display format of a standard definition television;

Figure 25 is a flow diagram which illustrates the operation of the transcoder and decoder of Figure 22;

Figure 26 is flow diagram which illustrates the flow of Figure 25 in more detail;

Figures 27a-b illustrate the effect of transcoding according to the present invention;

Figure 28 is a block diagram illustrating the transcoder and decoder of Figure 22 in more detail;

Figure 29 is a block diagram of the transcoder of Figure 22.

Figures 30a-c are a flow diagram for adaptive resolution decoding.

Figure 31 illustrates an adaptive resolution decoder.

Figures 32a-d show differing architectures.

Figure 33 indicates reference blocks in motion compensation.

Corresponding numerals and symbols in the different figures and tables refer to corresponding parts unless otherwise indicated.

DESCRIPTION OF THE PREFERRED EMBODIMENTS

Overview

The simplest, but most computational and storage demanding, method for downsampling an HDTV MPEG signal to a resolution comparable to standard TV would be to decode and store the high definition signal at full resolution and downsample to a reduced resolution in the spatial domain for display/output. That is, perform inverse DCT on all the blocks of an I frame to have a full resolution I frame which is stored for subsequent motion compensation plus downsampled for output, perform motion compensation for a P frame using the stored full resolution preceding I (or P) frame plus inverse DCT for the residuals to have a full resolution P frame which is stored for subsequent motion compensation plus downsampled for output, and perform motion compensation for a B frame using the stored full resolution I and/or P frames and inverse DCT residual to have the high definition B frame which is downsampled for output.

The preferred embodiments limit the computation and/or storage of such high definition MPEG decoding by one or more of the features of downsampling in the DCT domain prior to inverse DCT, adaptive resolution motion compensation with full resolution decoding only for selected macroblocks, and upsampling of stored reduced resolution macroblocks for motion compensation. In particular, the preferred embodiments include:

(1) Full resolution I frames, adaptive resolution P frames, and reduced resolution B frames.
(2) Adaptive resolution I and P frames and reduced resolution B frames.
(3) Reduced resolution I frames, adaptive resolution P frames, and reduced resolution B frames.

The preferred embodiments may extract a 960 by 540 (SDTV) signal from a 1920 by 1080 HDTV bitstream, and the 960 by 540 may be further subsampled and extended to desired sizes such as 760 by 576.

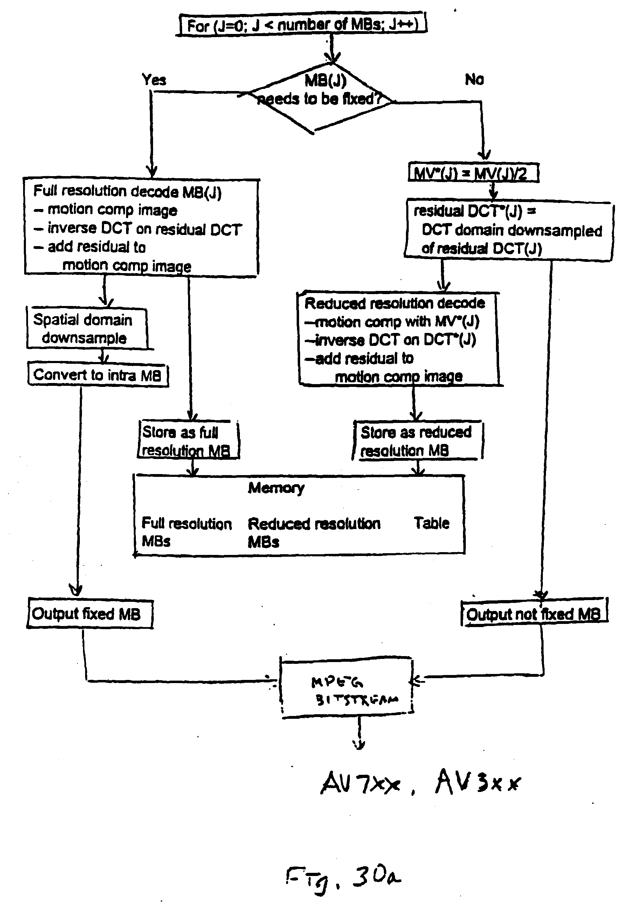

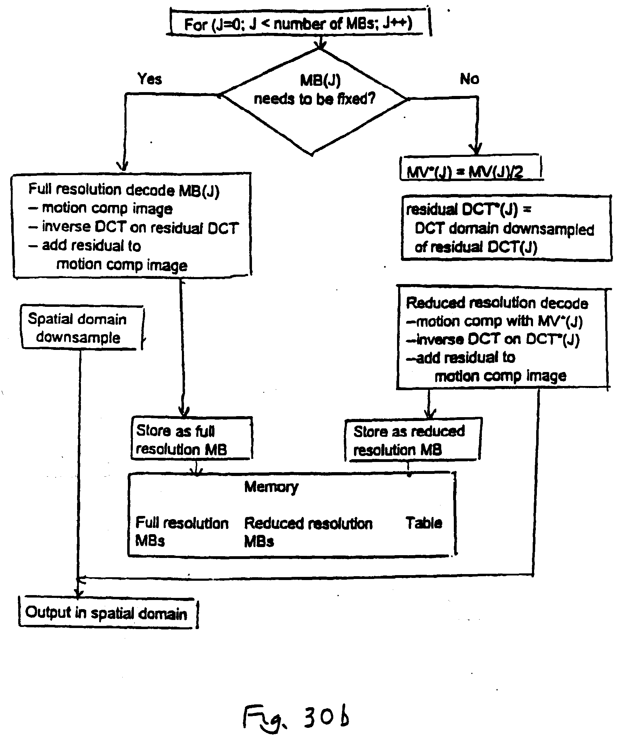

Figures 30a-c illustrate the P frame macroblock decoding within a preferred embodiment decoder which performs downsampling in the DCT domain for all macroblocks and then selects the macroblocks to fix with full resolution while still processing all macroblocks with reduced resolution; that is, the lefthand and righthand vertical paths in Figures 30a-b are in parallel. Then prior to display/output compose the final output from the two paths. Such a transcoder will always work regardless of the type of input sequences. An alternative is to not process macroblocks at reduced resolution which are to be fixed; that is, a macroblock traverses either the lefthand or righthand vertical path but not both. This eliminates duplicative computation but demands accurate prediction/scheduling of the computation requirements due to the larger computation to fix macroblocks.

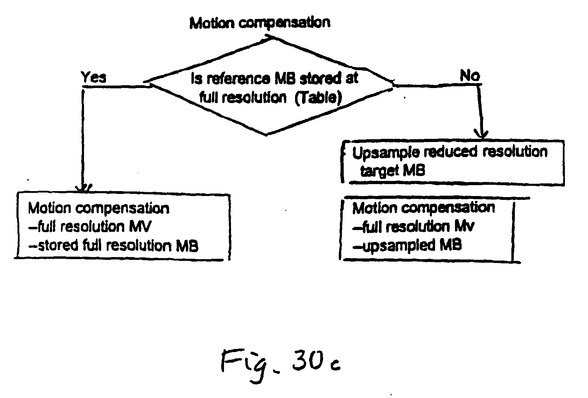

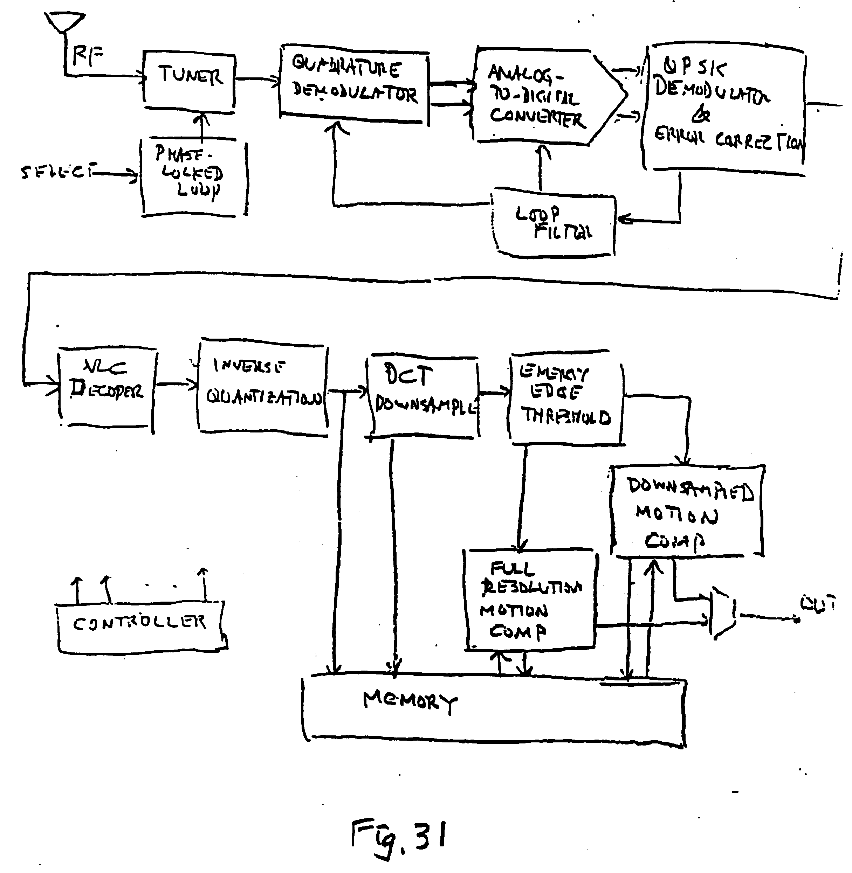

Figure 31 shows a system incoporating the adaptive resolution decoding.

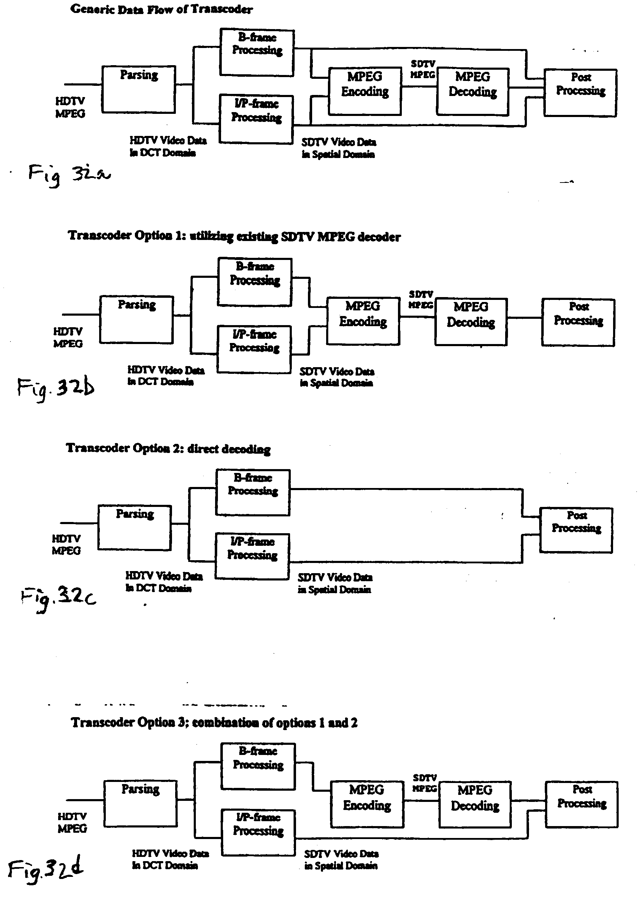

Figures 32a-d illustrate alternative transcoder architectures. In particular, Figure 32a has an initial parser which extracts the MPEG video from the audio and similar functions, separate B-frame and I/P frame processors which reflects the full resolution decoding possibility for the I/P frame macroblocks prior to downsampling, and an MPEG encoder if the transcoder is to be used with an existing MPEG decoder as illustrated in Figure 32b. The post processor performs further processing on spatial domain video, such as resizing, anti-flicker filtering, square pixel conversion, progressive-interlace conversion, et cetera. Figure 32c is use of the downsampled output directly, and Figure 32d shows a hybrid use of an existing MPEG decoder only for B frames.

Adaptive resolution P frame preferred embodiment

The adaptive resolution P frame macroblock preferred embodiments decode I frame macroblocks at full resolution (e.g., HDTV 1920 by 1080), B frames macroblocks at reduced resolution (e.g., 960 by 540), and P frames with a mixture of some macroblocks at full resolution and some at reduced resolution. The decision of whether to decode a P frame macroblock at full or reduced resolution can be made using various measures and can adapt to the situation. For example, decide to decode an input P frame motion vector plus associated macroblock (four 8x8 DCT luminance residual blocks (and optionally the two 8x8 DCT chrominance residual blocks)) at full resolution when the sum of the magnitudes of the (luminance) residual DCT high frequency coefficients exceeds a threshold. Alternatively, select a macroblock for full resolution decoding if its motion vector (MV) points to a stored (mostly) full resolution decoded P frame macroblock or a stored I frame macroblock with high energy or edge content. For such macroblocks the motion compensation at reduced resolution may generate motino vector drift.

Figures 30a-c show the flow for P-frame macroblocks. In more detail, decode as follows (with Y indicating luminance, Cb and Cr indicating chrominance, MV indicating motion vector, and A indicating residual):

(a) I-frame macroblocks:

1. Apply inverse DCT to the four 8x8 Y DCT (and optionally to the 8x8 Cb DCT and 8x8 Cr DCT) to get 16x16 Y (and 8x8 Cb and 8x8 Cr). The chrominance alternate includes downsample Cb and Cr DCTs by taking the low frequency 4x4 and then inverse DCT to obtain 4x4 Cb and Cr.

2. Store 16x16 Y (and 8x8 Cb and 8x8 Cr) for use as references on subsequent P frame and B frames.

3. 4-point downsample (or other spatial downsample; see discussion below) to 8x8 Y and 4x4 Cb and 4x4 Cr for reduced resolution display/output, and optionally repack in groups of four (i.e., four 8x8 Y and one 8x8 Cb and one 8x8 Cr) to form a display/output (reduced resolution) macroblock.

(b) P frame macroblocks: categorize as either: (1) to-be-fixed (full resolution decode) and (2) not fixed (reduced resolution decode)

(1) For a to-be-fixed macroblock

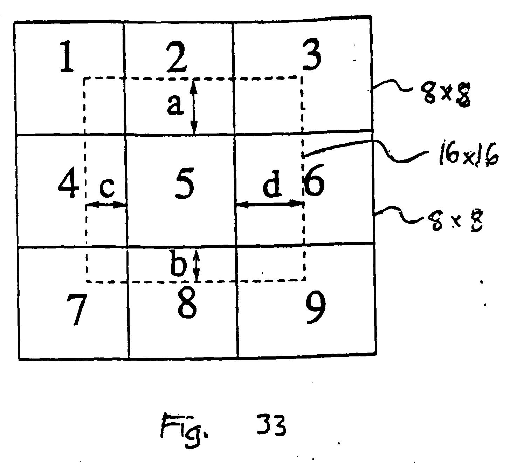

1. Use MV and a reference 16x16 Y (optionally 8x8 Cb,Cr) stored macroblock generated from full resolution 16x16 Y (and 8x8 Cb,Cr) of stored previous I or fixed P macroblocks and/or 16x16 Y, 8x8 Cb,Cr upsampled from stored 8x8 Y, 4x4 Cb,Cr of stored previous not-fixed P macroblocks; see Figure 33 and related discussion about references below. The upsampling may be any interpolation method, which may use boundary pixels of abutting stored blocks.

2. Apply inverse DCT to four 8x8 ΔY DCT (optionally 8x8 A Cb, ΔCr DCT) to get four 8x8 ΔY (8x8 ΔCb, ΔCr).

3. Add the full resolution reference macroblock from step 1 and full resolution residual macroblock from step 2 to reconstruct full resolution four 8x8 Y (8x8 Cb,Cr).

4. Store the reconstructed 16x16 Y (and 8x8 Cb,Cr) for reference use on next P frame and B frames (and convert to an Intra coded macroblock).

5. 4-point average downsample (or other downsample) to 8x8 Y and 4x4 Cb,Cr for display/output and optionally repack in groups of four for a display/output reduced resolution macroblock.

(2) For a the not-fixed macroblock

1. Use MV/2 and generate a 8x8 Y, 4x4 Cb,Cr reference from stored 8x8 Y, 4x4 Cb,Cr of previous not-fixed P and/ or 8x8 Y, 4x4 Cb,Cr downsampled from stored full resolution (16x16 Y and possibly 8x8 Cb,Cr) I and fixed P macroblocks. Because MV has ½ pixel resolution, MV/2 has ¼ pixel resolution, so the 8x8 Y, 4x4 Cb,Cr reference may be generated by 3 to 1 weightings.

2. Downsample four 8x8 ΔY DCT, 8x8 ΔCb, ΔCr DCT to get 8x8 ΔY DCT, 4x4 ΔCb ΔCr DCT.

3. Apply inverse DCT to 8x8 ΔY DCT, 4x4 ΔCb, ΔCr DCT to get 8x8 ΔY, 4x4 ΔCb, ΔCr

4. Add the reference from step 1 and the residual from step 3 to reconstruct 8x8 Y, 4x4 Cb,Cr

5. Store 8x8 Y and 4x4 Cb,Cr for reference on next P frame and B frames and display/output or optinally repack in a group of four to output a reduced resolution four 8x8 Y, 8x8 Cb,Cr.

(c) B frame macroblocks

1. Use MV/2 for both motion vectors and generate a 8x8 Y, 4x4 Cb,Cr reference from stored 8x8 Y, 4x4 Cb,Cr of previous not-fixed P and/or 8x8 Y, 4x4 Cb,Cr downsampled from stored full resolution (four 8x8 Y, 8x8 Cb,Cr) I and fixed P macroblocks. Because MV has ½ pixel resolution, MV/2 has ¼ pixel resolution, so the 8x8 Y, 4x4 Cb, Cr reference may be generated by 3 to 1 weightings.

2. Downsample four 8x8 ΔY DCT, 8x8 ΔCb, ΔCr DCT to get 8x8 ΔY DCT, 4x4 ΔCb, ΔCr DCT.

3. Apply inverse DCT to 8x8 ΔY DCT, 4x4 ΔCb, ΔCr DCT to get 8x8 ΔY, 4x4 ΔCb, ΔCr

4. Add the reference from step 1 and the residual from step 3 to reconstruct 8x8 Y, 4x4 Cb,Cr and optionally repack in a group of four to display/output a reduced resolution four 8x8 Y, 8x8 Cb,Cr.

The motion vector derives from the luminance part of the macroblocks, so whether the chrominance is decoded at full resolution or reduced resolution will not affect motion vector drift. Thus the full resolution decoding of I frame macroblocks and to-be-fixed P frame macroblocks may only involve the luminance blocks. The chrominance blocks can all be downsampled in the DCT domain by taking the 4x4 low frequency subblock and applying a 4x4 inverse DCT, and use the motion vector divided by 2.

The alternatives for an HDTV P frame thus include downsample the 32,400 8x8 DCT residual luminance blocks into 8050 8x8 DCT residual luminance blocks directly in the DCT domain as described below (and analogously for the chrominance blocks), and then categorize these blocks as either (1) to be fixed or (2) no fix is needed. Alternatively, assess the need for fixing prior to downsampling to eliminate unnecessary downsampling in the DCT domain. Further, the categorization criteria can adapt to available computational power.

The preferred embodiment downsampling may be performed in various systems, such as a set top box on a standard definition TV so as to enable reception of HDTV signals and conversion to standard TV signals.

Downsampling in the DCT domain

Preferred embodiment downsampling is done in the DCT domain. The input data stream to a HDTV decoder is in MPEG-2 format. Pixel data are coded as DCT coefficients of 8x8 blocks. A prior art downsampling scheme would be to perform inverse DCT operation on the data to recover them back to coefficients in the spatial domain and then perform downsampling in the spatial domain to reduce resolution and size. Because the full resolution original picture needs to be stored in the spatial domain, the operation has large memory storage requirements. In addition, the two-step operation also results in large computational requirements.. The preferred embodiment DCT-domain downsampling converts full resolution and size DCT domain input data directly to reduced resolution and size spatial domain pixel values in one step, thus eliminating the need for storing the full resolution picture (especially B frames) in spatial pixel domain and also limiting computational requirements. The downsampling operation can be represented as a matrix operation of the type $x \rightarrow MXM^T$ where M is the downsampling matrix and X is the input DCT coefficients. M is 8 by 16 when X is the 16x16 composed of four 8x8 DCT luminance blocks of a macroblock; and so $MXM^T$ is 8x8.

Two types of preferred embodiment downsampling matrices have shown good results: lowpass filtering in the DCT domain and 4-point averaging in the spatial domain. The low pass filtering in the DCT domain has an 8x16 downsampling matrix M:

$$M = D[8]^T [I\ 0]\ D[16] \qquad \begin{vmatrix} D[8]^T & 0 \\ \\ 0 & D[8]^T \end{vmatrix}$$

where I is the 8x8 identity matrix, 0 the 8x8 zero matrix, D[16] is the 16x16 DCT transform matrix, and D[8] is the 8x8 DCT transform matrix. From right to left: the diagonal block $D[8]^T$s perform an inverse DCT of the four 8x8 blocks to make the 16x16 in the spatial domain, the D[16] performs a 16x16 DCT on the 16x16, the I selects out the low frequency 8x8 of the 16x16, and the D[8]t performs a final inverse DCT to yield the downsampled 8x8 in the spatial domain.

Similarly, averaging in the spatial domain as a downsampling matrix M:

$$M = \tfrac{1}{2} \quad \begin{vmatrix} 11 & 00 & 00 & 00 & 00 & 00 & 00 & 00 \\ \dots & & \dots & & & \dots & & \\ 00 & 00 & 00 & 00 & 00 & 00 & 00 & 11 \end{vmatrix} \begin{vmatrix} D[8]^T & 0 \\ & \\ 0 D[8]^T & \end{vmatrix}$$

where again the diagonal $D[8]^T$s perform an inverse DCT of the four 8x8 blocks to make the 16x16 in the spatial domain and the 8x16 matrix of 0s and Is performs a 4-point averaging (groups of 2x2 pixels are averaged to form a single downsampled pixel).

Details of the downsampling by low pass filtering in the DCT domain

Rather than just discard the DCT high frequency coefficients (e.g., just keep the 4x4 low frequency coefficients of each 8x8 DCT block) to reduce inverse DCT computation and reduce reconstrucded frame resolution, generate a 16x16 DCT using the four 8x8 DCT luminance blocks of a macroblock and then discards the 16x16 DCT high frequency coefficients (e.g., retain the 8x8 low frequency coefficients) to reduce inverse DCT computation and reduce resolution. This switch to a macroblock basis yields computational advantage because the 16x16 DCT coefficients of the macroblock can be expressed in terms of the 8x8 block DCT coefficients plus certain symmetries in this computation can be taken advantage. And the low pass filitering with the larger 16x16 yields better results than just patching together four 4x4 low pass filterings

More particularly, let P(j,k) be a 16x16 macroblock made up of the four 8x8 blocks: $P_{00}$, $P_{01}$, $P_{10}$, and $P_{11}$:

$$P = \begin{vmatrix} P_{00} & P_{01} \\ \\ P_{10} & P_{11} \end{vmatrix}$$

The 16x16 DCT coefficients of P, denoted by W(m,n), are given by:

$$W(m, n) = (1/8)SSP(j, k)\cos[\bullet(2j+1)m/32]\cos[p(2k+1)n/32]$$

where the sums are over $0 \le j \le 15$ and $0 \le k \le 15$ plus an extra factor of $1/\hat{u}2$ when m = 0 or n = 0. W is 16x16 and the foregoing two dimensional DCT definition may be interpreted as two matrix multiplications of 16x16 matrices: $W = D[16]^T P D[16]$ where the 16x16 matrix D[16] has elements $D[16](k,n) = (1/\hat{u}\ 8)\cos[\bullet(2k+1)n/32]$ (with an extra factor of $1/\hat{u}2$ when n equals 0) and $D[16]^T$ is the transpose of D[16]. Of course, left multiplication by D[16] gives the DCT for the column variable and right multiplication by $D[16]^T$ gives the DCT for the row variable. D[16] is an orthogonal matrix $(D[16]D[16]^T = I)$ due to the orthogonality of the cosines of different frequencies. This implies that the inverse DCT is given by: $P = D[16]WD[16]^T$.

Also, W can be considered as made up of four 8x8 blocks: $W_{00}$, $W_{01}$, $W_{10}$, and $W_{11}$:

$$W \;=\; \begin{vmatrix} W_{00} & W_{01} \\ W_{10} & W_{11} \end{vmatrix}$$

$W_{00}$ are the low spatial frequency coefficients, and the preferred embodiment downsamples by taking $W_{00}$ as the DCT coefficients for an 8x8 block resulting from a downsampling of the original 16x16 macroblock P. That is, $W_{00}$ is the DCT of the desired reduced resolution downsampled version of P. Indeed, for a HDTV frame of 1080 rows of 1920 pixels downsampled by 4 yields a 540 rows of 960 pixels which is close to the standard TV frame of 576 rows of 720 pixels.

$W_{00}$ can be expressed in terms of the DCTs of the 8x8 blocks $P_{00}$, $P_{01}$, $P_{10}$, and $P_{11}$, and these DCTs are in the bitstream. Denote these DCTs by $P^{\wedge}_{00}$, $P^{\wedge}_{01}$, $P^{\wedge}_{10}$, and $P^{\wedge}_{11}$. Let the 8x8 matrix D[8] have elements D[8](k,n) = 1/2cos[•(2k+1)n/16] (with an extra factor of 1/û2 when m equals 0), then D[8] is orthogonal and the 8x8 DCT transformation is matrix pre and post multiplication by $D[8]^T$ and D[8], respectively: $P^{\wedge}00 = D[8]^T P_{00} D[8]$, .., $P^{\wedge}_{11} = D[8]^T P_{11} D[8]$, and the inverse DCTs are: $P_{00} = D[8] P^{\wedge}_{00} D[8]^T$, .., $P_{11} = D[8] P_{11} D[8]^T$. Inserting the inverse DCT expressions for $P_{00}$, $P_{01}$, $P_{10}$, and $P_{11}$ into the definition of W and perfomring the 16x16 matrix multiplications as 8x8 submatrix multiplications with 16x16 matrix D[16] expressed as the four 8x8 submatrices $D[16]_{00}$, ..., $D[16]_{11}$. yields:

$$W_{00} \;=\; D[16]_{00}{}^T D[8] P^{\wedge}_{00} D[8]{}^T D[16]_{00} \;+\; D[16]_{10}{}^T D[8] P^{\wedge}_{10} D[8]{}^T D[16]_{00} \;+\; D[16]_{00}{}^T D[8] P^{\wedge}_{01} D[8]{}^T D[16]_{10} \;+\; D[16]_{10}{}^T D[8] P^{\wedge}_{11} D[8]{}^T D[16]_{10}$$

$$= (SP^{\wedge}_{00} + TP^{\wedge}_{10})S^T \;+\; (SP^{\wedge}_{01} + TP^{\wedge}_{11})T^T$$

where $S = D[16]_{00}{}^T D[8]$ and $T = D[16]_{10}{}^T D[8]$ are both 8x8 matrices but together have only a few nontrivial components. Indeed,

$$S \;=\; 1/2 \begin{bmatrix} 1 & 0 & 0 & 0 & 0 & 0 & 0 & 0 \\ a0 & a1 & a2 & a3 & b0 & b1 & b2 & b3 \\ 0 & 1 & 0 & 0 & 0 & 0 & 0 & 0 \\ a4 & a5 & a6 & a7 & b4 & b5 & b6 & b7 \\ 0 & 0 & 1 & 0 & 0 & 0 & 0 & 0 \\ a8 & a9 & a10 & a11 & b8 & b9 & b10 & b11 \\ 0 & 0 & 0 & 1 & 0 & 0 & 0 & 0 \\ a12 & a13 & a14 & a15 & b12 & b13 & b14 & b15 \end{bmatrix}$$

and

$$T = 1/2 \begin{bmatrix} 1 & 0 & 0 & 0 & 0 & 0 & 0 & 0 \\ -a0 & a1 & -a2 & a3 & -b0 & b1 & -b2 & b3 \\ 0 & -1 & 0 & 0 & 0 & 0 & 0 & 0 \\ -a4 & a5 & -a6 & a7 & -b4 & b5 & -b6 & b7 \\ 0 & 0 & 1 & 0 & 0 & 0 & 0 & 0 \\ -a8 & a9 & -a10 & a11 & -b8 & b9 & -b10 & b11 \\ 0 & 0 & 0 & -1 & 0 & 0 & 0 & 0 \\ -a12 & a13 & -a14 & a15 & -b12 & b13 & -b14 & b15 \end{bmatrix}$$

where

$a0 = (1/4)\Sigma\cos[\pi(2n+1)/32]$
$a1 = (1/\sqrt{8})\Sigma\cos[\pi(2n+1)/32]\cos[\pi(2n+1)/16]$
$a2 = (1/\sqrt{8})\Sigma\cos[\pi(2n+1)/32]\cos[\pi(2n+1)2/16]$
$a3 = (1/\sqrt{8})\Sigma\cos[\pi(2n+1)/32]\cos[\pi(2n+1)3/16]$
$b0 = (1/\sqrt{8})\Sigma\cos[\pi(2n+1)/32]\cos[\pi(2n+1)4/16]$
$b1 = (1/\sqrt{8})\Sigma\cos[\pi(2n+1)/32]\cos[\pi(2n+1)5/16]$
$b2 = (1/\sqrt{8})\Sigma\cos[\pi(2n+1)/32]\cos[\pi(2n+1)6/16]$
$b3 = (1/\sqrt{8})\Sigma\cos[\pi(2n+1)/32]\cos[\pi(2n+1)7/16]$
$a4 = (1/4)\Sigma\cos[\pi(2n+1)3/32]$
...
$b15 = (1/\sqrt{8})\Sigma\cos[\pi(2n+1)7/32]\cos[\pi(2n+1)7/16)]$

with the sums over $0 \leq n \leq 7$. In terms of S and T, the computations to find $W_{00}$ amount to three repetitions of: 8x8 matrix multiplications with S and T plus matrix addition of the products, and three transpositions: $W_{00} = (SM^T + TN^T)^T$ with $M = SP^{\wedge}_{00} + TP^{\wedge}_{10}$ and $N = SP^{\wedge}_{01} + TP^{\wedge}_{11}$. Many terms are shared among these computations: consider generally $Z = SX + TY$ for X, Y, and Z all 8x8 matrices. Then the particular form of S and T imply for $j = 0, 1, ..., 7$:

```
Z(0,j) = X(0,j) + Y(0,j)

Z(1,j) = a0[X(0,j)-Y(0,j)] + a1[X(1,j)+Y(1,j)] + a2[X(2,j)-
Y(2,j)]     +     a3[X(3,j)+Y(3,j)]     +     b0[X(4,j)-Y(4,j)]     +
b1[X(5,j)+Y(5,j)] + b2[X(6,j)-Y(6,j)] + b3[X(7,j)+Y(7,j)]

Z(2,j) = X(1,j) - Y(1,j)

Z(3,j) = a4[X(0,j)-Y(0,j)] + a5[X(1,j)+Y(1,j)] + a6[X(2,j)-
Y(2,j)]     +     a7[X(3,j)+Y(3,j)]     +     b4[X(4,j)-Y(4,j)]     +
b5[X(5,j)+Y(5,j)] + b6[X(6,j)-Y(6,j)] + b7[X(7,j)+Y(7,j)]

Z(4,j) = X(2,j) + Y(2,j)

Z(5,j)    =    a8[X(0,j)-Y(0,j)]    +    a9[X(1,j)+Y(1,j)]    +
a10[X(2,j)-Y(2,j)]   +   a11[X(3,j)+Y(3,j)]   +   b8[X(4,j)-Y(4,j)]   +
b9[X(5,j)+Y(5,j)] + b10[X(6,j)-Y(6,j)] + b11[X(7,j)+Y(7,j)]

Z(6,j) = X(3,j) - Y(3,j)

Z(7,j)    =    a12[X(0,j)-Y(0,j)]    +    a13[X(1,j)+Y(1,j)]    +
a14[X(2,j)+Y(2,j)]   +   a15[X(3,j)+Y(3,j)]   +   b12[X(4,j)-Y(4,j)]   +
b13[X(5,j)+Y(5,j)] + b14[X(6,j)+Y(6,j)] + b15[X(7,j)+Y(7,j)]
```

There are many terms that are shared among the foregoing equations for the $Z(I,j)$, and precomputation of them can save more computation as follows. Define:

$$A0 = X(0,j) + Y(0,j)$$
$$A1 = X(0,j) - Y(0,j)$$
$$B0 = X(1,j) - Y(1,j)$$
$$B1 = X(1,j) + Y(1,j)$$
$$C0 = X(2,j) - Y(2,j)$$
$$C1 = X(2,j) + Y(2,j)$$
$$D0 = X(3,j) - Y(3,j)$$
$$D1 = X(3,j) + Y(3,j)$$
$$E = X(4,j) - Y(4,j)$$
$$F = X(5,j) - Y(5,j)$$
$$G = X(6,j) - Y(6,j)$$
$$H = x(7,j) + Y(7,j)$$

Thus the $Z(i,j)$ equations become:

```
Z(0,j) = A0
Z(1,j) = a0*A1 + a1*B1 + a2*C1 + a3*D1 + b0*E + b1*F + b2*G
+ b3*H
Z(2,j) = B0
Z(3,j) = a4*A1 + a5*B1 + a6*C1 + a7*D1 + b4*E + b5*F + b6*G
+ b7*H
Z(4,j) = C0
Z(5,j) = a8*A1 + a9*B1 + a10 *C1 + a11*D1 + b8*E + b9*F +
b10*G + b11*H
Z(6,j) = D0
Z(7,j) = a12*A1+ a13*B1+ a14*C1+ a15*D1+ b12*E+ b13*F+
b14*G+ b15*H
```

The total computation needed to obtain $Z(k,j)$ can be estimated from the foregoing equations (32 multiplications and 40 additions) as 72 operations for each column $Z(.,j)$. To compute Z thus takes 8 * 72 = 576 operations. Thus the computation of $W_{00}$ will take 3 * 576 = 1728 operations.

Therefor, a 16x16 macroblock can be downsampled with 1728 operations. To downsamle a full-size 1080x1960 HDTV sequence at 30 frames/second (assuming all frame macroblocks), implies computing power (number of instructions for a DSP with one cycle multiplications) of:

$$(1080/16)*(1920/16)*1728*30 \text{ instructions per second} = 425 \text{ MIPS.}$$

Store the downsampled 8x8 blocks of the I frame in a buffer. These blocks will be used in the motion compensated reconstruction of the subsequet P and B frames.

Motion vector drift in P frames

Decoding P and B frames require both the motion vector predicted macroblocks from stored P and/or I frames and the inverse DCT of the residuals. The residual macroblock DCT (four 8x8 DCT luminance residual blocks plus two 8x8 DCT chrominance residual blocks) can be downsampled in the DCT domain as described in the foregoing. The motion vectors may be scaled down (i.e., divide both components by 2 and optionally round to the nearest half pixel locations if the scaled motion vector is to be output). However, a P frame following several P frames after an I frame may exhibit flickering about highly detailed textures and jaggedness around moving edges. The problem traces back to a loss of accruarcy in the motion vector. Consequently, the preferred embodiment assesses the likelihood of motion vector drift for a P frame (downsampled) macroblock and selectrively fix macroblocks with a high likelihood by decoding at full resolution prior to downsampling for display/output. (The decoding only performs inverse DCT for the pixels that are needed in some embodiments.) For all B frame macroblocks and for P frame macroblocks which are not likely to have motion vector drift, the macroblocks of residuals are downsampled in the DCT domain as in the foregoing, and the motion vectors just divided by two in the reconstructed downsampled frames.

In particular, for a P frame 16x16 macroblock of DCT residuals (four 8x8 DCT luminance blocks of residuals in the bitstream) first perform the downsampling in the DCT domain as described in the foregoing to yield $W_{00}$, the 8x8 DCT of the downsampled block of residuals. Next, measure the energy of $W_{00}$ by the sum of squares of the coefficients $(\Sigma\Sigma W_{00}(j,k)^2)$ with the sum over the range $0 \leq j$, $k \leq 7$ and also measure the fraction of energy which is high spatial frequency energy of $W_{00}$ by the sum of the squares of the coeficients with the sum excluding the subrange $0 \leq j$, $k \leq 3$. If the energy is greater than a threshold and the portion of high frequency energy is greater than a second threshold, then classify the block as needing to be fixed (full resolution macroblock decoding); otherwise classify the block as not to be fixed (available for DCT domain downsampling). All B frame macroblocks are classified as available for DCT domain downsampling; B frames only predict from P or I frames, so they do not incur motion vector drift once the P frames overcome motion vector drift.

Alternative determinations of which P frame macroblocks to fix may be made, and the determination may be made prior to downsampling, so the full resolution inverse DCT could be used and then the reconstructetd macroblock stored at full resolution and lastly spatially downsampled for output at reduced resolution. The characteristics of a macroblock for fixing: large high frequency components, large motion vector, motion vector points to stored full resolution fixed macroblock, et cetera. The idea is that if a block has a lot of high frequency cmponents (large DCT coefficients at high frqeuencies), then it needs fixing. Also, if a block is in a high motion region (large motion vector) it may not need fixing (unless the DCT high frequency compoenents are too large) because rapid motion is less precisely perceived. Also, a P frame macroblock represents residuals, so a P frame macroblock with a high energy or edge content I macroblock as its reference may need fixing to maintain accuracy. Further, fixing P frame macroblocks takes computational power, so the decision to fix or not may include a consideration of currently available computational power; for example, thresholds can be adjusted depending upon load.

For selective blocks needing to be fixed with full 16x16 macroblock decoding, reconstruct as follows. First, use the full motion vector to locate the 16x16 reference macroblock (or 17x17 for half pixel motion vectors) in the preceding full resolution I or P frame (the stored I frame has full resolution, but the P frame may be (partially) stored in reduced resolution and this will lead to upsampling of the stored reduced resolution portions). The reference macroblock straddles (at most) nine different 8x8 blocks as illustrated in Figure 33 where the broken-line large square is the reference 16x16 macroblock and the numbered solid line blocks are the 8x8 blocks covered by the reference macroblock. These nine 8x8 blocks are blocks of at most four 16x16 (2x2 array of spatial 8x8s) macroblocks. If one or more of these four macroblocks is stored at full resolution (i.e., an I macroblock of a fixed P macroblock), then simply use the pixels of the 8x8 for the corresponding portion of the reference 16x16. Contrarily, if any of these four macroblocks is stored with reduced resolution (e.g., a not fixed P macroblock), then for these macroblocks (which are stored as 8x8 luminance and 4x4 chrominance) upsample (at least a portion of) the 8x8 luminance block to a 16x16 simply by interpolation (this may use boundary pixels of abutting stored macroblocks and may simply be linear interpolation or a context -based interpolation may be used) and use the upsampled pixels for the corresponding portions of the 16x16 reference. Thus the reference macroblock will be full resolution 16x16, and the residual DCT has full resolution inverse DCT to add to the refefence.

For P macroblocks that do not need fixing (and all B macroblocks), just downsample the residual DCT in the DCT domain as in the foregoing, and divide the motion vector components by 2. Locate the reference block (8x8 at reduced resolution) which will lie in a group of at most four 8x8 reduced resolution blocks. If any of these 8x8 reduced resolution blocks is stored at full resolution, then use a 4-point or other spatial downsample to make 8x8 reduced resolution.. Use the pixels of the reduced resolution 8x8 for the correspond pixels of the 8x8 reference; the ¼ pixel motion vector resolution may require 3 to 1 weightings to make the reference 8x8.

The chrominance blocks may be treated analogously, except the full resolution is 8x8 and downsampling is just low pass filitering to a 4x4 DCT. But motion vectors are derived from luminance only, so full resolution chrominance is not needed to deter motion vector drift.

Figures 30a-c is a flow diagram for the P macroblocks showing the decision of to be fixed or not fixed. Note that a lookup table (hash table) keeps track of the fixed macroblocks and can be used to help adapt to currently available computation power or memory.

Cropped alternative adaptive P frames

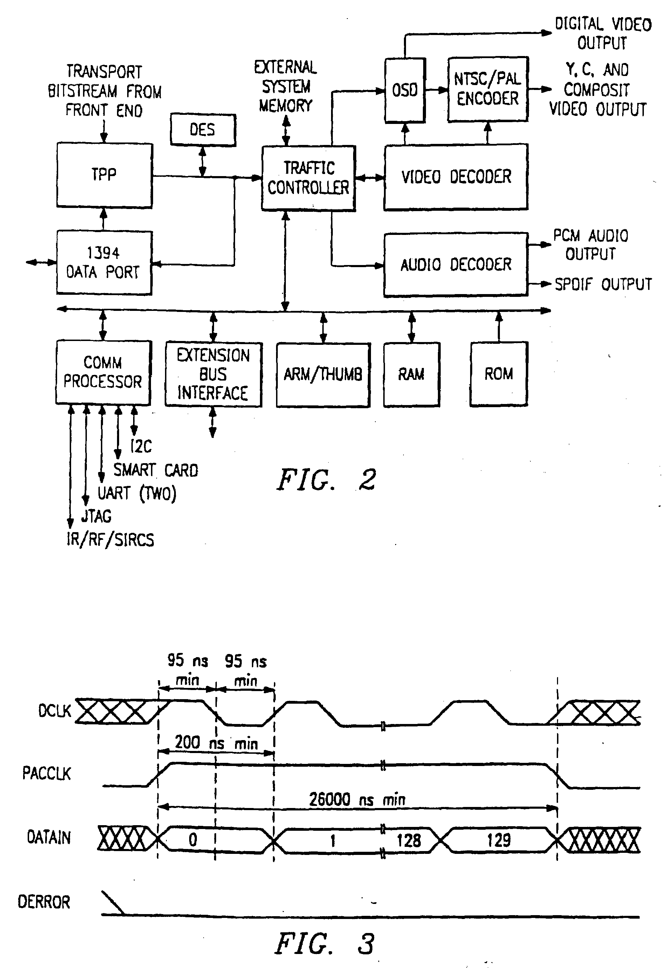

An alternative preferred embodiment for handling the P frame macroblocks to be fixed without upsampling stored reduced resolution proceeds as follows. The reference macroblock straddles (at most) nine different 8x8 blocks as illustrated in Figure ? where the broken-line large square is the reference macroblock and the numbered solid line blocks are the 8x8 blocks covered by the reference macroblock. However, only a portion (sometimes a small portion) of the pixels inside the 8x8 blocks are used in the reference macroblock. In the extreme case, only one pixel of a block is used. Because only the high energy macroblocks need full decoding, the usual approach of applying inverse DCT to all of the relevant blocks (i.e., all nine blocks in Figure 2) wastes computing power. Thus crop the blocks in the DCT (frequency) domain as described in the following paragraphs, and inverse DCT only the cropped portions. This yields a full resolution reference macroblock. Then add the inverse DCT of the 16x16 macroblock of DCT residuals. Lastly, downsample this full resolution macroblock to yield the 8x8 downsampled block for the reconstruction of the P frame. . Also store the full resolution macroblock because a subsequent P frame macroblock may need selective decoding and will use this full resolution macroblock as the reference macroblock. Of course, the last P frame before the next I frame does not need any full resolution storage because B frame macroblocks are all treated as low energy/edge.

The operation on each 8x8 block involved in a reference macroblock is either (1) obtain all of the pixels in the block or (2) crop the block so that only the pixels needed remain. In matrix terminology, the operation of cropping a part of a block can be written as matrix ultiplications. For instance, croping the last m rows of an 8x8 matrix A can be written as $A_c = C_L A$ where $C_L$ is 8x8 with all components 0 except $C_L(j,j) = 1$ for $8-m \leq j \leq 7$. Similarly, postmultiplication by $C_R$ crops the last n columns if $C_R$ has all 0 components except $C_R(j,j) = 1$ for $8-n \leq j \leq 7$. Thus the operation of cropping the lower right m rows by n columns submatrix of A can be written as $A_c = C_L A C_R$. Then denoting the DCT of A by $A^\wedge$ implies $A = D[8]^T A^\wedge D[8]$ where $D[8]$ again is the 8x8 DCT transformation matrix. Thus $A_c = C_L D[8]^T A^\wedge D[8] C_R$ and again name the products as $U = C_L D[8]^T$ and $V = C_R D[8]^T$ so that $A_c = UA^\wedge T^T$. Note that the first 8-m rows of U are all zeros and the first 8-n columns of T are all zeros. Thus denoting the mx8 matrix of the m nonzero rows of U as $U_C$ and the 8xn matrix of the n nonzero columns of V as $V_C$, the mxn matrix $A_{cropped}$ consisting of the cropped portion of A is given by $A_{cropped} = U_C A^\wedge V_C^T$. Actually, $U_C$ is the 1st m rows of the inverse 8x8 DCT matrix, and $V_C$ is the last rows of the inverse 8x8 DCT matrix. The inverse 8x8 DCT matrix is given by:

$$\begin{bmatrix} 0.3536 & 0.4904 & 0.4619 & 0.4157 & 0.3536 & 0.2778 & 0.1913 & 0.0975 \\ 0.3536 & 0.4157 & 0.1913 & -0.0975 & -0.3536 & -0.4904 & -0.4619 & -0.2778 \\ 0.3536 & 0.2778 & -0.1913 & -0.4904 & -0.3536 & 0.0975 & 0.4619 & 0.4157 \\ 0.3536 & 0.0975 & -0.4619 & -0.2778 & 0.3536 & 0.4157 & -0.1913 & -0.4904 \\ 0.3536 & -0.0975 & -0.4619 & 0.2778 & 0.3536 & -0.4157 & -0.1913 & 0.4904 \\ 0.3536 & -0.3778 & -0.1913 & 0.4904 & -0.3536 & -0.0975 & 0.4619 & -0.4157 \\ 0.3536 & -0.4157 & 0.1913 & 0.0975 & -0.3536 & 0.4904 & -0.4619 & 0.2778 \\ 0.3536 & -0.4904 & 0.4619 & -0.4157 & 0.3536 & -0.2778 & 0.1913 & -0.0975 \end{bmatrix}$$

The number of operations needed to compute $B = U_C A^\wedge$ is $n*13*8 = 104m$, where B is an mx8 matrix. Computing $A_{cropped} = B V_C^T$ needs $m*13*n = 13nm$ operations. The total for one block is $104m + 13mn = (13n + 104)m$. Of course, computing $A_{cropped}^T$ essentially also computes $A_{cropped}$ and by symmetry this takes $(13m + 104)n$ operations. Thus, $A_{croped}$ can be computed with $[13*\max(m,n) + 104]*\min(m,n)$ operations.

Note that a full 8x8 inverse DCT (with no fast algorithms) needs $13*8+104)*8=1664$ operations. However, if only one pixel is used from the 8x8 block, then the foregoing shows that the cropped approach computation only needs $(13*1 + 104)*1 = 117$ operations; a savings of 93%.

Estimate the computational complexity of the selective macroblock decoding by using the foregoing estimates of a single cropped block as follows. Consider Figure 2, for a 16x16 macroblock the largest covered area (broken-line square) is 17x17 (due to half pixel resolution of the motion vector). Therefore, $a + b \leq 9$ and $c + d \leq 9$. Thus the computational load for each of the 9 blocks is as follows (presuming without loss of gnerality that $a \leq b$, $c \leq d$, and $b \leq d$) :

block 1: (13a+104)c
block 2: (13*8+104)a
block 3: (13d+104)a
block 4: (13*8+104)c

block 5: 1664
block 6: (13*8+104)d
block 7: (13b+104)c
block 8: (13*8+104)b
block 9: (13d+104)b

Therefore the total computation for obtaining all of the pixels needed for the 16x16 motion compensation part of reconstruction is the sum of computations for blocks 1-9 which is 1664 + (13*8+104)(a+b+c+d) + 13(a+b)(c+d) + 104 (a+b+2c) and this is at most 8257 operations. The total operations for bilinear interpolation is 64 operations. The cost of forward 8x8 DCT is 64*11*2 = 1408 operations. The total operations count for obtraining the reference macroblock, filtering/downsampling, and forward DCT is at most 9729 operations.

For 1920x1080 HDTV sequence at 30 frames/second, the worst case scenario is that no B frames are present. The total computational load is

$$(1920/16)*(1080/16)*9729*30 \text{ operations/second} = 2382 \text{ MIPS}$$

With 400 MIPS available the selective full decoding for about 17% of the macroblocks. If the HDTV sequence is in the format of IBBF (one P frame for every 3 frames), then 400 MIPS could handle about 50% of the P frame macroblocks.

Adaptive resolution I frame macroblock preferred embodiments

The I macroblocks may also be categorized into full resolution and reduced resolution decoding analogous to the P macroblocks. In particular, small high frequency components in the I macroblock luminance DCTs permits reduced resolution decoding by downsampling in the DCT domain as previously described. Thus, as with P macroblocks, I macraoblocks may be stored either as full resolution or reduced resolution, and when a reduced resolution macroblock is used as a part of a full resolution reference, it is upsampled.

Other methods for deciding whether to decode in full resolution include current computational load and whether the prior P macroblock in the same location was fixed or not.

Reduced resolution I macroblocks with adaptive resolution P macroblocks

The I macroblocks may be all downsampled in the DCT domain and stored as reduced resolution. When a P macroblock is to be fixed and the reference is in an I frame, then upsample the stored reduced resolution I macroblocks as previously described.

B and P frames

For macroblocks available for DCT domain downsampling (B frame macroblocks and low energy/edge P frame macroblocks), downsample and reconstruct as follows. Divide the motion vector components by 2, round up to the nearest half pixel, and use the previously reconstructed downsampled 8x8 blocks of I and/or P frames stored in a buffer to find the reference blocks. Downsample the macroblocks of residuals (four 8x8 DCT blocks of residuals) in the DCT domain as described in the foregoing for I frame macroblocks to find the 8x8 DCT block of residuals; and apply the inverse DCT to yield the 8x8 block of residuals. Add the 8x8 block of residuals to the 8x8 reference block to complete the reconstruction of the 8x8 block.

Fast DCT method applications

The preceding selective decoding for high energy/edge P frame macroblocks to avoid for motion vector drift has the advantage of small end to end delay for each pixel and the code is simple. However, a bit more implementation complexity can significantly reduce the number of operations by combining fast DCT inversion methods with the preceding selective decoding methods.

There are many methods for performing fast DCT computation. One of the best results is achieved with the following decomposition of the 8x8 DCT matrix into a product of simpler 8x8 matrices:

$$D[8] = \Delta P B_1 B_2 M A_1 A_2 A_3$$

where the factor matrices are:

$$\Delta \;=\; \begin{bmatrix} 0.3536 & & & & & & & \\ & 0.2549 & & & & & & \\ & & 0.2706 & & & & & \\ & & & 0.3007 & & & & \\ & & & & 0.3536 & & & \\ & & & & & 0.4500 & & \\ & & & & & & 0.6533 & \\ & & & & & & & 1.2814 \end{bmatrix}$$

$$P \;=\; \begin{bmatrix} 1 & 0 & 0 & 0 & 0 & 0 & 0 & 0 \\ 0 & 0 & 0 & 0 & 0 & 1 & 0 & 0 \\ 0 & 0 & 1 & 0 & 0 & 0 & 0 & 0 \\ 0 & 0 & 0 & 0 & 0 & 0 & 0 & 1 \\ 0 & 1 & 0 & 0 & 0 & 0 & 0 & 0 \\ 0 & 0 & 0 & 0 & 1 & 0 & 0 & 0 \\ 0 & 0 & 0 & 1 & 0 & 0 & 0 & 0 \\ 0 & 0 & 0 & 0 & 0 & 0 & 1 & 0 \end{bmatrix}$$

$$B_1 \;=\; \begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 1 \\ 0 & 0 & 0 & 0 & 0 & 1 & 1 & 0 \\ 0 & 0 & 0 & 0 & 0 & 1 & -1 & 0 \\ 0 & 0 & 0 & 0 & -1 & 0 & 0 & 1 \end{bmatrix}$$

$$B_2 \;=\; \begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 1 & 0 & 0 & 0 & 0 \\ 0 & 0 & -1 & 1 & 0 & 0 & 0 & 0 \\ 0 & 0 & 0 & 0 & 1 & 0 & 0 & 0 \\ 0 & 0 & 0 & 0 & 0 & 1 & 0 & 1 \\ 0 & 0 & 0 & 0 & 0 & 0 & -1 & 0 \\ 0 & 0 & 0 & 0 & 0 & -1 & 0 & 1 \end{bmatrix}$$

$$M = \begin{bmatrix} 1 & 0 & 0 & 0 & 0 & 0 & 0 & 0 \\ 0 & 1 & 0 & 0 & 0 & 0 & 0 & 0 \\ 0 & 0 & 0.7071 & 0 & 0 & 0 & 0 & 0 \\ 0 & 0 & 0 & 1 & 0 & 0 & 0 & 0 \\ 0 & 0 & 0 & 0 & -0.9239 & 0 & -0.3827 & 0 \\ 0 & 0 & 0 & 0 & 0 & 0.7071 & 0 & 0 \\ 0 & 0 & 0 & 0 & -0.3827 & 0 & 0.9239 & 0 \\ 0 & 0 & 0 & 0 & 0 & 0 & 0 & 1 \end{bmatrix}$$

$$A_1 = \begin{bmatrix} 1 & 1 & 0 & 0 & 0 & 0 & 0 & 0 \\ 1 & -1 & 0 & 0 & 0 & 0 & 0 & 0 \\ 0 & 0 & 1 & 1 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 1 & 0 \\ 0 & 0 & 0 & 0 & 0 & 0 & 0 & 1 \end{bmatrix}$$

$$A_2 = \begin{bmatrix} 1 & 0 & 0 & 1 & 0 & 0 & 0 & 0 \\ 0 & 1 & 1 & 0 & 0 & 0 & 0 & 0 \\ 0 & 1 & -1 & 0 & 0 & 0 & 0 & 0 \\ 1 & 0 & 0 & -1 & 0 & 0 & 0 & 0 \\ 0 & 0 & 0 & 0 & -1 & -1 & 0 & 0 \\ 0 & 0 & 0 & 0 & 0 & 1 & 1 & 0 \\ 0 & 0 & 0 & 0 & 0 & 0 & 1 & 1 \\ 0 & 0 & 0 & 0 & 0 & 0 & 0 & 1 \end{bmatrix}$$

$$A_3 = \begin{bmatrix} 1 & 0 & 0 & 0 & 0 & 0 & 0 & 1 \\ 0 & 1 & 0 & 0 & 0 & 0 & 1 & 0 \\ 0 & 0 & 1 & 0 & 0 & 1 & 0 & 0 \\ 0 & 0 & 0 & 1 & 1 & 0 & 0 & 0 \\ 0 & 0 & 0 & 1 & -1 & 0 & 0 & 0 \\ 0 & 0 & 1 & 0 & 0 & -1 & 0 & 0 \\ 0 & 1 & 0 & 0 & 0 & 0 & -1 & 0 \\ 1 & 0 & 0 & 0 & 0 & 0 & 0 & -1 \end{bmatrix}$$

It takes a total 42*8 = 336 operations to do the 8 point DCT for either the rows or the columns. Thus the total computation for a two-dimensional 8x8 DCT is 672 operations.

After applying the foregoing fast DCT on the columns and then applying the cropping matrix, only m nonzero rows exist. The computation for the row DCT then takes only 42m operations. Also, either $A_{cropped}$ or $A_{cropped}^T$ could be computed, so the total computation amounts to 336 + 42min(m,n).

Now, compare the number of operations for using 8x8 inverse DCT used with and without the fast factorization together with cropping for DCT inversion. The number of operations is smaller without the fast factorization if min(m, n) ≤ 3 (equals [104 + 13max(m,n)]min(m,n) operations) and with the fast factorization for min(m,n) ≥ 4 (equals 336 + 42min(m,n) operations).

Thus the worse case of the reference macroblock covering portions of nine 8x8 blocks as in Figure 33 has the following total number of operations for DCT inversion. Again, without loss of generality take a + b = 9, c + d = 9, and a ≤ c < b ≤ d; then the total number of operations is for all possible a and c values is:

| a | c | total operations |
|---|---|---|
| 1 | 1 | 3637 |
| 1 | 2 | 3969 |
| 1 | 3 | 4301 |
| 1 | 4 | 3977 |
| 2 | 2 | 4344 |
| 2 | 3 | 4753 |
| 2 | 4 | 4468 |
| 3 | 3 | 5205 |
| 3 | 4 | 4959 |
| 4 | 4 | 4830 |

The highest number of operations is 5205, and the average is 4453. Factoring in the bilinear interpolation (64f) and the forward DCT computation (672), the total computation for one macroblock is 5940 (worst case) and 5189 (average) operations.

For a 1920x1080 HDTV sequence (assuming no B frames), the total computation required is for the worst case:

$$(1920/16)*(1080/16)*5940*30 \text{ ops/sec} = 1454 \text{ MIPs}$$

and for the average case:

$$(1920/16)*(1080/16)*4453*30 \text{ ops/sec} = 1090 \text{ MIPs}$$

With 400 MIPs, one can do selective macroblock decoding for about 28% of all the macroblocks. Because it is unlikely that all the macroblocks lie on the worst case grid, the average number is a better measure. Using the average number for a macroblock, one can do selective macroblock decoding for 37% of the macroblocks. If the sequence is in IBBP format, one should have enough computation power to perform the invense motion decoding for almost 100% of the macroblocks for all P frames and thereby avoid motion vector drift.

Interlaced field downsampling

For interlaced field format, denote the even and odd numbered lines of the macroblock P and $P^E$ and $P^O$, respectively. Thus $P^E$ and $P^O$ and 8x16 fields, and each can be considered as made of two blocks: $P^E = P_0^E + P_1^E$ and $P^O = P_0^O + P_1^O$; this is analogous to the foregoing decomposition of P into four blocks. Then downsample the rows of $P^E$ and $P^O$ as previously:

$$P^E_{down} = P_0^E S^T + P_1^E T^T \text{ and } P^O_{down} = P_0^O S^T + P_1^O T^T$$

where $P^E_{down}$ and $P^O_{down}$ are 8x8 blocks.

The 8x8 DCT of $P_{down}$, the 8x8 downsampled P, can be written as the average of the $P^E_{down}$ and $P^O_{down}$

$$P_{down} = (P^E_{down} + P^O_{down})/2$$

The whole procedure for one macroblock requires computing two matrix multiplications, which take 336*2 = 672 operations. The averaging takes another 64 operations (scaling will be done at the end). The total count is 736 operations per macroblock. Therefore, field macroblocks can be downsampled with fewer operations than 16x16 macroblocks.

Set-top box

A preferred embodiment set-top box illustrated in Figure 3 includes the demodulation (tuner, PLL synthesis, IQ demodulation, ADC, VLD, FEC) and MPEG-2 decoding of an incoming high resolution signal. The MPEG-2 decoder uses the preferred embodiments of the foregoing description.
Further details of the downsampling plus a repacking of chrominance blocks for easy inverse DCT follows. Also, a description of a decoder (AV310) is appended.

Aspects of the present invention include methods and apparatus for transcoding and decoding a frequency domain encoded HDTV data stream for presentation on a standard definition television. In the following description, specific information is set forth to provide a thorough understanding of the present invention. Well-known circuits and devices are included in block diagram form in order not to complicate the description unnecessarily. Moreover, it will be apparent to one skilled in the art that specific details of these blocks are not required in order to practice the present invention.

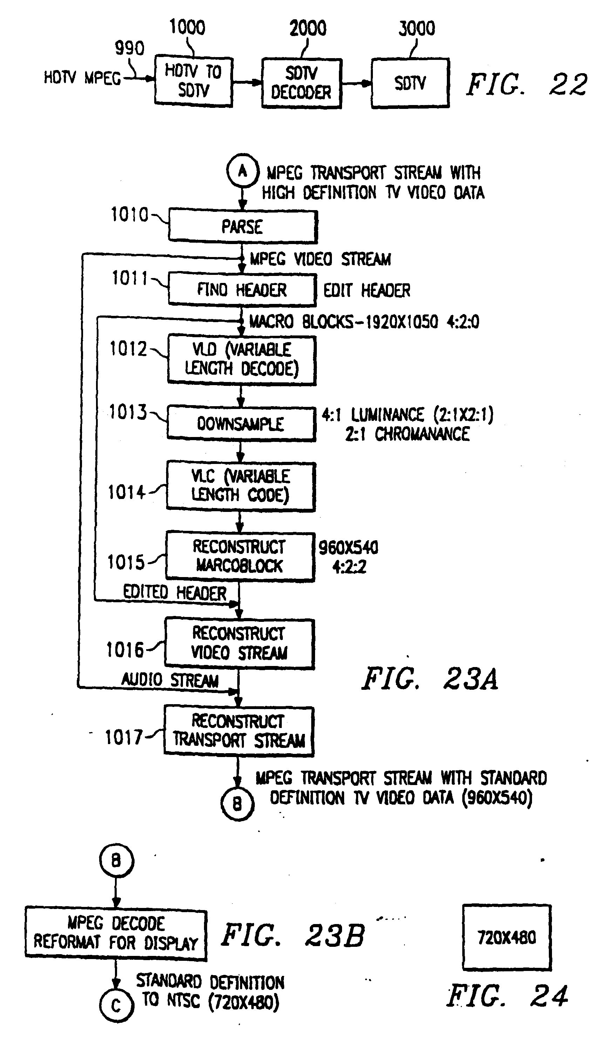

Figure 22 is a block diagram showing a transcoder 1000 and an SDTV decoder 2000 according to the present invention connected to a standard definition television set 3000. A frequency domain encoded data stream 990 is connected to an input terminal of transcoder 1000. Data stream 990 is encoded according to the MPEG standard, which is well known, and contains both an audio data stream and a video data stream. The video data stream contains frequency domain encoded data which represents a high definition television (HDTV) picture.

Figure 23A and 23B is a flowchart illustrating a transcoding process and a decoding process according to the present invention. Figure 23A illustrates the transcoding process performed by transcoder 1000. An MPEG transport stream is provided to input "A." A parse block examines the MPEG transports stream and extracts a video data stream, which is encoded according to the MPEG standard. A "find header" block then synchronizes to the video data stream and extracts a set of macro blocks. Each macro block is a frequency domain encoded representation of a 16 x 16 pixel region from in a picture frame. A complete HDTV picture frame has 1920 x 1050 pixels. A "VLD" block then performs a variable length decode on each macro block to obtain four luminance subblocks and two chrominance subblocks. Each set of luminance subblocks is downsampled by 2:1 in both an x and a y direction to get a total reduction of 4:1. Each chrominance subblock is downsampled in one direction to get a 2:1 reduction. Advantageously, and according to the present invention, the downsampling step is done in the frequency domain.

Still referring to Figure 23A, block VLC now encodes the six subblocks formed by the downsampling step with a variable length code to form a new macro block that represents an 8 x 8 pixel region. In this manner, an HDTV picture frame with a resolution of 1920 x 1050 is transcoded to a pseudo SDTV picture frame with a resolution of 960 x 540 pixels. Next, the video data stream is now reconstructed using the macro blocks formed by the downsampling step and combining them with header information from the original data stream that has been edited to reflect the current format of the video data stream. Finally, the transport stream is reconstructed by combining the reconstructed video stream with the audio data stream. This reconstructed MPEG transport stream is advantageously compatible with any fully compliant MPEG decoder and is provided on output "B."

Figure 23B illustrates the decoding process. The reconstructed MPEG transport stream is decoded and converted to spatial domain data stream that conforms to the NTSC format and provided on output "C." An NTSC picture frame can be represented as a picture frame with 720 x 480 pixels, as illustrated in Figure 24.

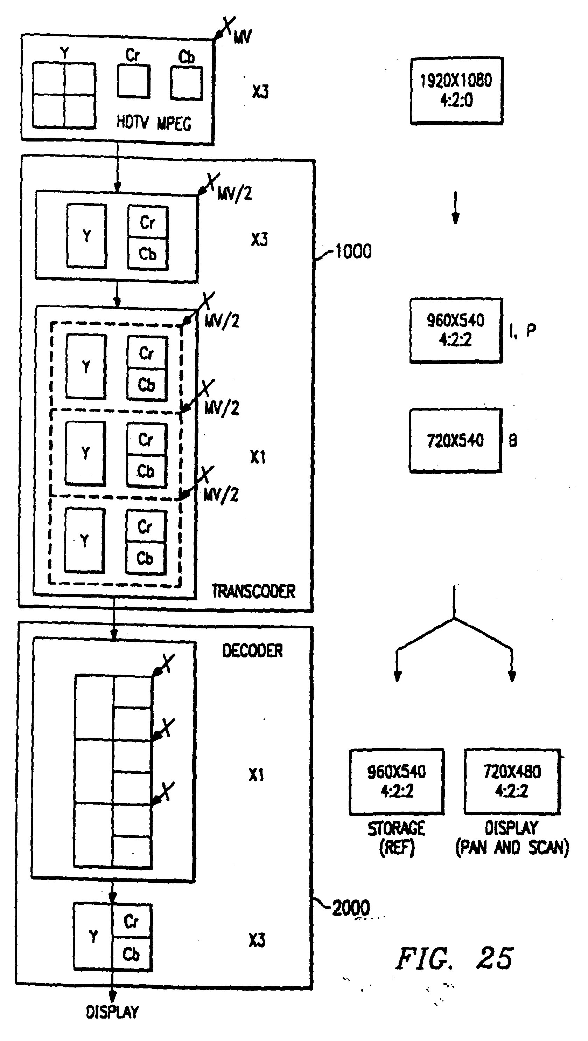

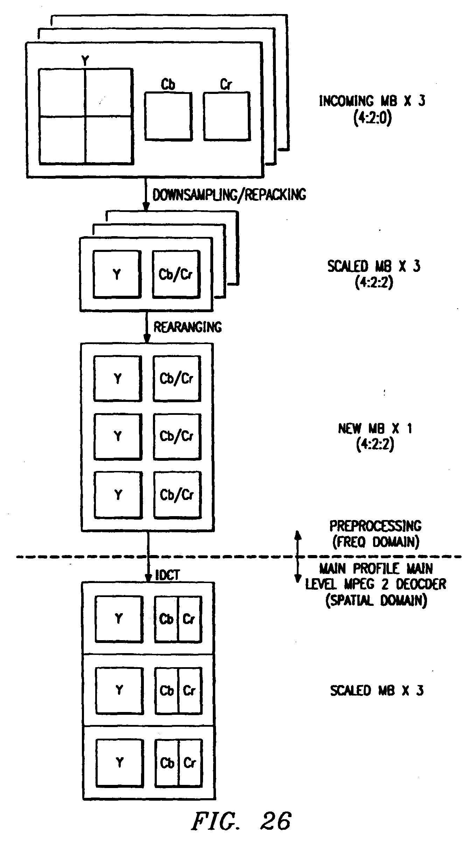

Figure 25 Figure 26 are a flow diagrams which illustrate the operation of the transcoder and decoder of Figure 22. Three macro blocks are processed at a time. Each macro block has a 4:2:0 format and represents a picture frame which has a resolution of 1920 x 1050. All three are downsampled in the frequency domain and then combined in reconstruction block 1015 (Figure 23A) while still in the frequency domain to form a single new macro block which has a 4:2:2 format and represents a picture frame which has a resolution of 960 x 540. Thus, each new macro block represents three scaled original macro blocks.

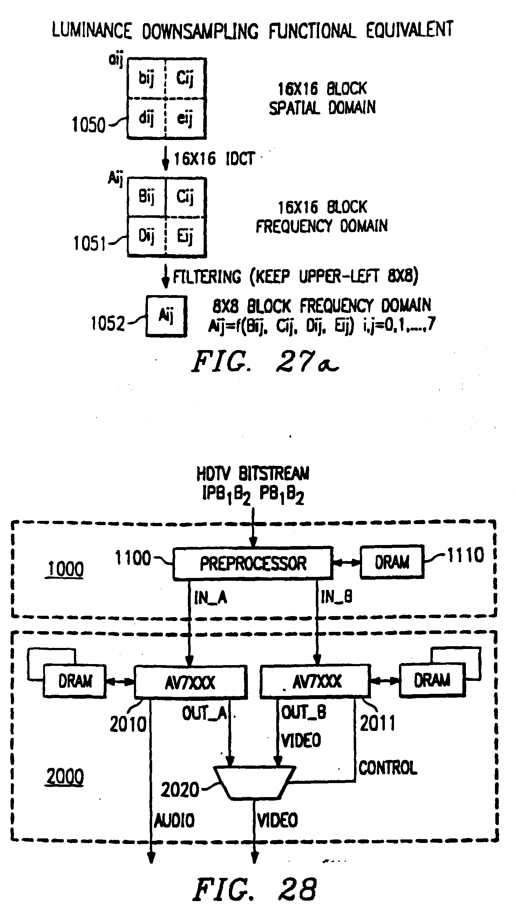

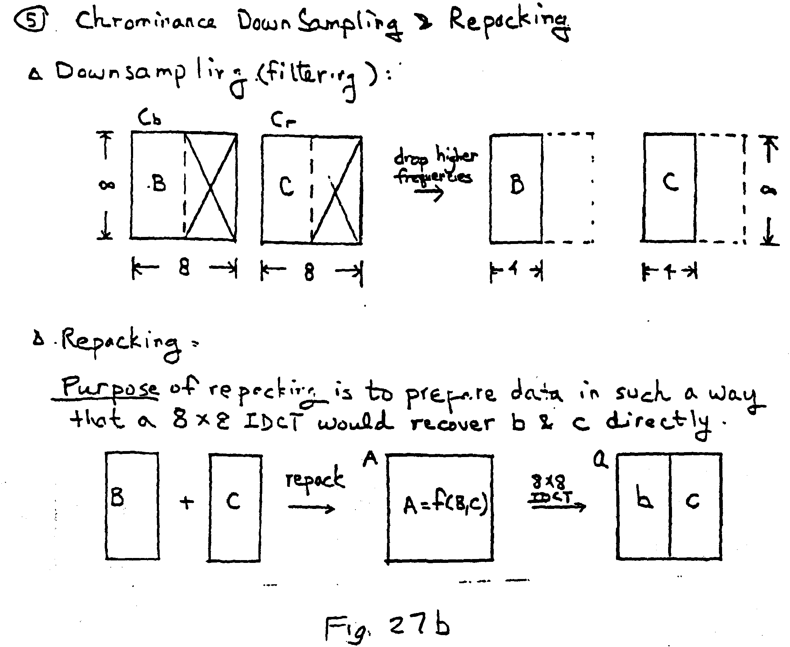

Figure 27 illustrates the effect of transcoding according to the present invention. According the MPEG 2 specification, an HDTV source picture is represented in the spatial domain by a number of 16 x 16 blocks of luminance values, one for each pixel. Block 1050 is one such block of luminance values. Block 1050 is composed of four subblocks; bij, cij, dij and eij. In order to reduce the resolution of an HDTV frame for display on a standard definition TV, it would be desirable to filter block 1050 to obtain an equivalent block which represents only 8 x 8 pixels. However, this cannot be done directly since the MPEG2 encoding process transmits a frequency domain block 1051 that is formed by an IDCT. In block 1051, the four subblocks are now frequency domain blocks Bij, Cij, Dij, and Eij. According to the present invention, a downsampling is performed in the frequency domain, so that block 1051 does not need to be converted to the spatial domain by performing a compute intensive DCT. Thus, the resulting block 1052 is a frequency domain block that represents 8 x 8 pixels and is a function of Bij, Cij, Dij, and Eij.

According to MPEG2, a video sequence is represented by a series of I frames interspersed with P frames and B frames. An I frame contains a complete picture frame, while B frames and P frames contain motion vectors and sparsely populated arrays of image data. According to the present invention, motion vectors are also scaled down corresponding to the downsampling of the image data.

The technique for downsampling the luminance and chrominance image data in the frequency domain will now be described in detail.

Luminance Downsampling in the DCT domain

Note for all calculations the scale factor is ignored to reduce complexity. Small letters a, b, c, d,f indicate spatial domain coefficients and capital letters A, B, C, D, E indicate frequency (DCT) domain coefficients.

Presume a 16x16 block made up of four 8x8 blocks as shown in Figure 27, the four 8x8 blocks have coefficients $b(i,j)$, $c(i,j)$, $d(i,j)$, $e(i,j)$, with $0 \leq i,j \leq 7$, respectively, and the combined 16x16 has coefficients $a(i,j)$ with $0 \leq i,j \leq 15$. Thus, $a(i,j) = b(i,j)$ for $0 \leq i,j \leq 7$; $a(i,j) = c(i,j-8)$ for $0 \leq i \leq 7$ and $8 \leq j \leq 15$; $a(i,j) = d(i-8,j)$ for $8 \leq i \leq 15$, $0 \leq j \leq 7$; and a $(i,j) = e(i-8,j-8)$ for $8 \leq i,j \leq 15$.

The 8x8 DCT of the four 8x8 blocks gives coefficients:

$$B(u,v) = \Sigma\Sigma\, b(i,j)\, \cos[(2i+1)u\pi/16]\, \cos[(2j+1)v\pi/16]$$

$$E(u,v) = \Sigma\Sigma\, e(i,j)\, \cos[(2i+1)u\pi/16]\, \cos[(2j+1)v\pi/16]$$

where the sums are over $0 \leq i \leq 7$ and $0 \leq j \leq 7$. Similarly,

$$A(u,v) = \Sigma\Sigma\, a(i,j)\, \cos[(2i+1)u\pi/32]\, \cos[(2j+1)v\pi/32]$$

where the sums are over $0 \leq i \leq 15$ and $0 \leq j \leq 15$.

$$= \Sigma\Sigma\, a(i,j)\, \cos[(2i+1)u\pi/16]\, \cos[(2j+1)v\pi/16]$$

For even terms:

$$A(2u,2v)=\Sigma\Sigma a(i,j)\cos[(2i+1)2u\pi/32]\cos[(2j+1)2v\pi/32]+$$

$$\Sigma\Sigma\, a(i,j+8)\cos[(2i+1)u\pi/16]\cos[(2(j+8)1)v\pi/16] +$$

$$\Sigma\Sigma\, a(i+8,j)\cos[(2(i+8)+1)u\pi/16]\cos[(2j+1)v\pi/16] +$$

$$\Sigma\Sigma a\, (i+8,j+8)\cos[(2(i+8)+1)u\pi/16]\cos[(2(j+8)+1)v\pi/16]$$

where the first sums over $0 \leq i \leq 15$ and $0 \leq j \leq 15$ has been broken up into four sums, each over $0 \leq i \leq 7$ and $0 \leq j \leq 7$. Using the $\cos[x + n\pi]=\cos x\ (-1)^n$ yields

$$A(2u,2v)=\Sigma\Sigma\, a(i,j)\cos[(2i+1)u\pi/16]\cos[(2j+1)v\pi/16] +$$

$$\Sigma\Sigma\, a(i,j)\cos[(2i+1)u\pi/16]\cos[(2j+1)v\pi/16]\, (-1)^v +$$

$$\Sigma\Sigma\, a(i,j)\cos[(2i+1)u\pi/16]\, (-1)^u \cos[(2j+1)v\pi/16] +$$

$$\Sigma\Sigma \ a(i,j)\cos[(2i+1)u\pi/16] \ (-1)^u \cos[(2j+1)v\pi/16] \ (-1)^v$$

Hence, $A(2u,2v)=B(u,v)+(-1)^vC(u,v)+(-1)^uD(u,v)+(-^{v+u}E(u,v)$

For odd terms

$$A(2u+1,2v+1) = \Sigma\Sigma \ a(i,j) \cos[(2i+1)(2u+1)\pi/32] \cos[(2j+1)(2v+1)\pi/32]$$

$$= \Sigma\Sigma \ b(i,j) \cos[(2i+1)(2u+1)\pi/32] \cos[(2j+1)(2v+1)\pi/32]+$$

$$\Sigma\Sigma \ c(i,j) \cos[(2i+1)(2u+1)\pi/32] \cos[(2(j+8)+1)(2v+1)\pi/32] +$$

$$\Sigma\Sigma \ d(i,j) \cos[(2(i+8)+1)(2u+1)\pi/32] \cos[(2j+1)(2v+1)\pi/32] +$$

$$\Sigma\Sigma \ e(i,j) \cos[(2(i+8)+1)(2u+1)\pi/32] \cos[(2(j+8)+1)\pi/32]$$

where the first sums over $0 \le i \le 15$ and $0 \le j \le 15$ has been broken up into four sums, each over $0 \le i \le 7$ and $0 \le j \le 7$. Substituting in the inverse DCTs for the spatial coefficients yields:

$$A(2u+1,2v+1) = \Sigma\Sigma \ [\Sigma\Sigma \ B(m,n) \cos[(2i+1)m\pi/16] \cos[(2j+1)n\pi/16]]$$

$$\cos[(2i+1)(2u+1)\pi/32] \cos[(2j+1)(2v+1)\pi/32] +$$

$$\Sigma\Sigma \ [\Sigma\Sigma \ C(m,n) \cos[(2i+1)m\pi/16] \cos[(2j+1)n\pi/16]]$$

$$\cos[(2i+1)(2u+1)\pi/32] \cos[(2(j+8)+1)(2v+1)\pi/32] +$$

$$\Sigma\Sigma \ [\Sigma\Sigma \ D(m,n) \cos[(2i+1)m\pi/16] \cos[(2j+1)n\pi/16]]$$

$$\cos[(2(i+8)+1)(2u+1)\pi/32] \cos[(2j+1)(2v+1)\pi/32] +$$

$$\Sigma\Sigma \ [\Sigma\Sigma \ E(m,n) \cos[(2i+1)m\pi/16] \cos[(2j+1)n\pi/16]]$$

$$\cos[(2(i+8)+1)(2u+1)\pi/32] \cos[(2(j+8)+1)(2v+1)\pi/32]$$

with the interior sums over $0 \le m \le 7$ and $0 \le n \le 7$
Switch order of summation:

$$A(2u+1,2n+1) = \Sigma\Sigma \ B(m,n)\Sigma\Sigma \ \cos[(2i+1)m\pi/16] \cos[(2j+1)\pi/16]$$

$$\cos[(2i+1)(2u+1)\pi/32] \cos[(2j+1)(2v+1)\pi/32] +$$

$$\Sigma\Sigma \ C(m,n)\Sigma\Sigma\cos()\cos()\cos()\cos() +$$

$$\Sigma\Sigma \ D(m,n)\Sigma\Sigma\cos()\cos()\cos()\cos() +$$

$$\Sigma\Sigma \ E(m,n)\Sigma\Sigma\cos()\cos()\cos()\cos()$$

$$So \ A(2u+1,2n+1) = \Sigma\Sigma \ B(m,n)B\hat{}(m,n,u,v) +$$

$$\Sigma\Sigma \ C(m,n)C\hat{}(m,n,u,v) +$$

$$\Sigma\Sigma \ D(m,n)D\hat{}(m,n,u,v) +$$

$$\Sigma\Sigma \ E(m,n)E\hat{}(m,n,u,v)$$

where

$$B\hat{}(m,n,u,v) =$$

$$\Sigma\Sigma\cos[(2i+1)m\pi/16]\cos[(2j+1)n\pi/16]]\cos[(2i+1)(2u+1)\pi/32]$$

$$os[(2j+1)(2v+1)\pi/32]$$

$$C\hat{}(m,n,u,v) =$$

$$\Sigma\Sigma\cos[(2i+1)m\pi/16]\cos[(2j+1)n\pi/16]]\cos[(2i+1)(2u+1)\pi/32]$$

$$\cos[(2(j+8)+1)(2v+1)\pi/32]$$

$$D\hat{}(m,n,u,v) =$$

$$\Sigma\Sigma\cos[(2i+1)m\pi/16]\cos[(2j+1)n\pi/16]]\cos[(2(i+8)+1)(2u+1)\pi/32]$$

$$\cos[(2j+1)(2v+1)\pi/32]$$

$$E\hat{}(m,n,u,v) =$$

$$\Sigma\Sigma\cos[(2i+1)m\pi/16]\cos[(2j+1)n\pi/16]]\cos[(2(i+8)+1)(2u+1)\pi/32]$$

$$\cos[(2(j+8)+1)(2v+1)\pi/32]$$

Taking just the lower frequency 8x8 block of A (which corresponds to $0 \leq u \leq 3$ and $0 \leq v \leq 3$ in the foregoing expressions for A(2u,2v) and A (2u+1,2v+1)) provides the downsampling in the DCT domain. An 8x8 inverse DCT on this 8x8 block of A yields the spatial downsample.

Chrominance downsampling in the DCT domain

The two 8x8 chrominance blocks of a macroblock may be downsampled by a factor of 2 in the DCT domain and repacked to form a single 8x8 block. Then an inverse DCT on this repacked 8x8 block will recover the two 8x4 downsampled spatial chrominance blocks. See Figure 27b and the following calculations with 8x4 B(u,v) denoting the low frequency half of 8x8 Cb DCT and 8x4 C(u,v) the low frequency half of 8x8 Cr DCT. Let b(i,j) and c(i,j) be the two 8x4 inverse DCTs of B(u,v) and C(u,v), respectively; so b and c are the downsampled spatial chrominace.
Let a(i,j) = b(i,j) for $0 \leq i \leq 7$ and $0 \leq j \leq 3$ and a(i,j) = c(i,j-4) for $0 \leq i \leq 7$ and $4 \leq j \leq 7$.

$$A(u,v) = \Sigma\Sigma\, a\,(i,j)\cos[(2i+1)u\pi/16]\cos[(2j+1)v\pi/16]$$

where the sum is over $0 \leq i \leq 7$ and $0 \leq j \leq 7$.
Split the sum into two sums corresponding to $0 \leq i \leq 3$ and $4 \leq j \leq 7$ and denote the sum over $0 \leq i \leq 7$ and $0 \leq j \leq 3$ as $A^1(u,v)$ and the sum over $0 \leq i \leq 7$ and $4 \leq j \leq 7$ as $A^2(u,v)$. Thus $A(u,v) = A^1(u,v) + A^2(u,v)$.
Insert the definition of a(i,j) in terms of b(i,j) and c(i,j), and b(i,j) and c(i,j) in terms of B(m,n) and C(m,n) into these sums:

$$A^1(u,v) =$$

$$\Sigma\Sigma[\Sigma\Sigma B(m,n)\cos[(2i+1)m\pi/16]\cos[(2j+1)n\pi/16]]\cos[(2i+1)u\pi$$

$$/16]\cos[(2j+1)v\pi/16]$$

where the sums are over $0 \leq i \leq 7$, $0 \leq j \leq 3$, $0 \leq m \leq 7$, $0 \leq n \leq 7$.
Reordering the sums yields:

$$A^1(u,v) = \Sigma\Sigma B(u,n)\cos[(2j+1)n\pi/16]\,\cos[(2j+1)v\pi/16]$$

where $B(u,n) = \Sigma\Sigma B(m,n)\cos[(2i+1)m\pi/16]\,\cos[(2i+1)u\pi/16]$. Thus $A^1(u,v) = \Sigma B(u,n)B^*(v,n)$ where $B^*(v,n) = \Sigma\cos[(2j+1)n\pi/16]\,\cos[(2j+1)v\pi/16]$. Similarly for $A^2$:

$$A^2(u,v) =$$

$$\Sigma\Sigma[\Sigma\Sigma C(m,n)\cos[(2i+1)m\pi/16]\cos[(2j+1)n\pi/16]]\cos[(2i+1)u\pi$$

$$/16]\cos[(2j+9)v\pi/16]$$

where the sums are over $0 \le i \le 7$, $0 \le j \le 3$, $0 \le m \le 7$, $0 \le n \le 7$.

Reordering the sums yields:

$$A^1(u,v) = \Sigma\Sigma C(u,n)\cos[(2j+1)n\pi/16]\,\cos[(2j+9)v\pi/16]$$

where $C(u,n) = \Sigma\Sigma c(m,n)\cos[(2i+1)m\pi/16]\,\cos[(2i+1)u\pi/16]$. Thus $A^2(u,v) = \Sigma C(u,n)C^*(v,n)$
where $C^*(v,n) = \Sigma\cos[(2j+1)n\pi/16]\,\cos[(2j+9)v\pi/16]$.
Combining: $A(u,v) = \Sigma\,iB(u,n)B^*(v,n) + c(u,n)c^*(v,n)]$.
Note that in the definition of $C^*$ the terms include $\cos[(2j+9)v\pi/16]$ which can be expanded:

$$\cos[(2j+9)v\pi/16] = \cos[(2j+1)v\pi/16 + v\pi/2]$$

$$\cos[(2j+1)v\pi/16]\cos[v\pi/2]+\sin[(2j+1)v\pi/16]\sin[v\pi/2]$$

and

$$\sin[v\pi/2] = 0,\ 1,\ 0,\ -1,\ ...\ \text{for } v = 0,\ 1,\ 2,\ 3,\ ...$$

$$\cos[v\pi/2] = 1,\ 0,\ -1,\ 0...\ \text{for } v = 0,\ 1,\ 2,\ 3,\ ...$$

Thus for even v:
  $A^2(u,v) = \pm\,\Sigma C(u,n)\Sigma\cos[(2j+1)n\pi/16]\,\cos[(2j+1)v\pi/16]$ with the + sign for $v = 0$ and 4 and the - sign for $v = 2$ and 6. Note that the sum of cosines is just $B^*(v,n)$.
Combining: $A(u,v) = \Sigma\,[B(u,n) + C(u,n)]\,B^*(v,n)$ for v even, which reduces the computation compared to the general expression for $A(u,v)$.

Reduction and control of computation rate

Other than even terms of luminance, other computations are in the form of

$$\Sigma\Sigma\,A(u,v)A^*(u,v) + \Sigma\Sigma\,B(u,v)B^*(u,v)$$

with the $A(u,v)$ and $B(u,v)$ terms in the frequency (DCT) domain and most of the higher order terms will be zero. We can sum the terms in zigzag order and the average number of nonzero terms for an 8x8 block are about 20. During variable length decoding stage we know the number of nonzero terms, and the highest terms which are not zero in zigzag order. Monitoring process to detect cases of an abnormal number of nonzero terms by checking amount of time and blocks needed to be processed remaining and start truncation of higher frequencies.

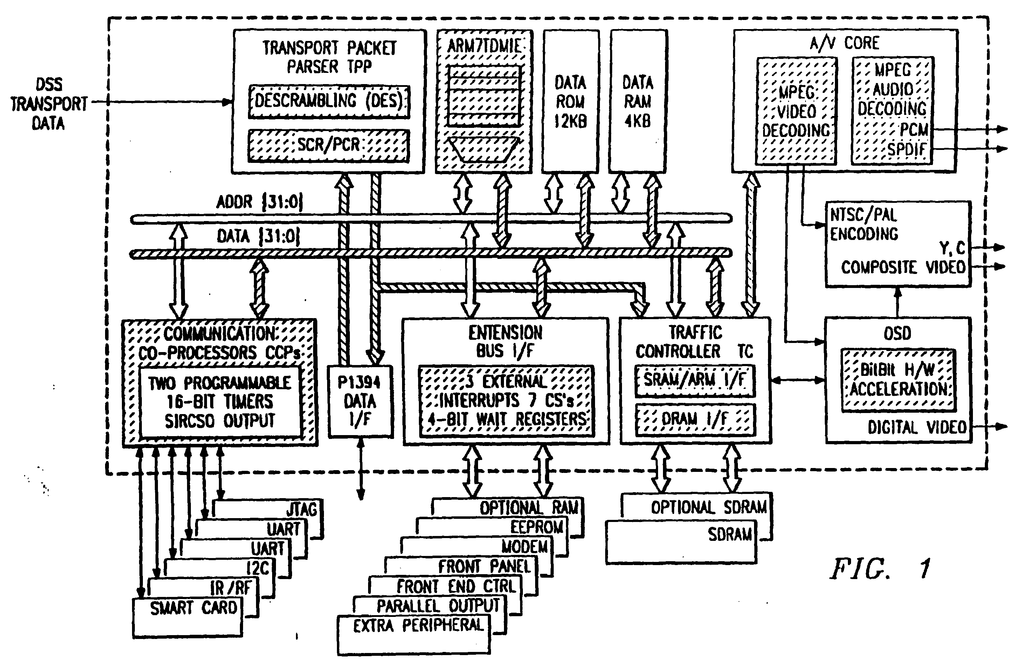

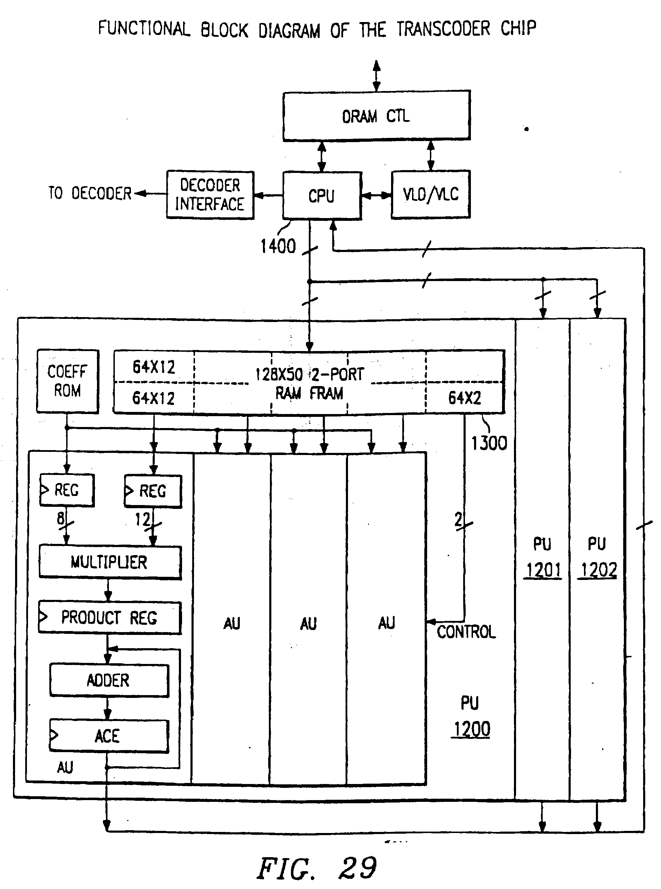

Figure 28 is a block diagram illustrating the transcoder and decoder of Figure 22 in more detail. Preprocessor 1100 performs the computations described above one each macro block. DRAM 1110 provides storage for a portion of the data stream. Preprocessor 1100 forms two streams of downsampled data, IN_A and IN_B that are passed to two MPEG decoder circuits, 2010 and 2011, respectively. Two processors are used in order to provide sufficient computational resources to decode and filter the pseudo SDTV data stream. These processors are described in detail with respect to Figures 1-21. It should be noted that this is not a limiting aspect of the present invention. A single decode circuitry with sufficient computing power can replace circuits 2010 and 2011.

Advantageously, each processor circuit 2010/2011 needs to decode only one half of the B frames. Each processor circuit is provided with all of the I frames and all of the P frames so that any B frame can be decoded by either processor. Mux 2020 is controlled to select a correct order of display frames which are output on OUT_A and OUT_B.

The normal bitstream has the following decoding sequence for I (intra), P (predicted) and B (bi-directional predicted) pictures:

$$\text{Decoding sequence: } I_0 \ P_3 \ B_1 \ B_2 \ P_6 \ B_4 \ B_5 \ P_9 \ B_7 \ B_8 \ P_{12} \ B_{10} \ ...$$

After preprocessor

$$\text{IN\_A has: } I_0 \ P_3 \ B_1 \ P_6 \ B_4 \ P_9 \ B_7 \ P_{12} \ B_{10} \ ...$$

$$\text{IN\_B has: } I_0 \ P_3 \ B_2 \ P_6 \ B_5 \ P_9 \ B_8 \ P_{12} \ B_{11} \ ...$$

with three frames time decoder A decodes $P_3 \ B_1$ and decoder B decodes $P_3 \ B_2$.

Display sequence:

$$\text{OUT\_A:} I_0 \ B_1 \ B_4 \ P_6 \ B_7 \ B_{10} \ P_{12} \ B_{13}$$

$$\text{OUT\_B: } B_2 \ P_3 \ B_5 \ B_8 \ P_9 \ B_{11} \ ...$$

For each decoder, every six frames time displays three pictures.

Figure 29 is a block diagram of the transcoder of Figure 22. Transcoder 1000 has three processing units 1200-1202 that are essentially identical. Each processing unit has four arithmetic units. A dual port RAM 1300 is organized so that while one half is being written with new data from the incoming MPEG macro blocks, the other half is accessed by the four arithmetic units. CPU 1400 performs steps 1010-1012 (Figure 23A) and provides macro blocks to each dual port RAM 1300.

Processors 2010 and 2011 will now be described in more detail. In the following descriptions, references to AV310 refer to processors 2010 and 2011.

Referring now to Figure 1 there may be seen a high level functional block diagram of a circuit 200 that forms a portion of an audio-visual system of the present invention and its interfaces with off-chip devices and/or circuitry. More particularly, there may be seen the overall functional architecture of a circuit including on-chip interconnections that is preferably implemented on a single chip as depicted by the dashed line portion of Figure 1.

As depicted inside the dashed line portion of Figure 1, this circuit consists of a transport packet parser (TPP) block 210 that includes a bitstream decoder or descrambler 212 and clock recovery circuitry 214, an ARM CPU block 220, a data ROM block 230, a data RAM block 240, an audio/video (A/V) core block 250 that includes an MPEG-2 audio decoder 254 and an MPEG-2 video decoder 252, an NTSC/ PAL video encoder block 260, an on screen display (OSD) controller block 270 to mix graphics and video that includes a bitblt hardware (H/W) accelerator 272, a communication co-processors (CCP) block 280 that includes connections for two UART serial data interfaces, infra red (IR) and radio frequency (RF) inputs, SIRCS input and output, an I2C port and a Smart Card interface, a P1394 interface (I/F) block 2990 for connection to an external 1394 device, an extension bus interface (I/F) block 300 to connect peripherals such as additional RS232 ports, display and control panels, external ROM, DRAM, or EEPROM memory, a modem and an extra peripheral, and a traffic controller (TC) block 310 that includes an SRAM/ARM interface (I/F) 312 and a DRAM I/F 314. There may also be seen an internal 32 bit address bus 320 that interconnects the blocks and an internal 32 bit data bus 330 that interconnects the blocks. External program and data memory expansion allows the circuit to support a wide range of audio/video systems, especially, for example, but not limited to, set-top boxes, from low end to high end.

The consolidation of all these functions onto a single chip with a large number of inputs and outputs allows for removal of excess circuitry and/or logic needed for control and/or communications when these functions are distributed among several chips and allows for simplification of the circuitry remaining after consolidation onto a single chip. More particularly, this consolidation results in the elimination of the need for an external CPU to control, or coordinate control, of all these functions. This results in a simpler and cost-reduced single chip implementation of the functionality currently available only by combining many different chips and/or by using special chipsets. However, this circuit, by its very function, requires a large number of inputs and outputs, entailing a high number of pins for the chip.

In addition, a JTAG block is depicted that allows for testing of this circuit using a standard JTAG interface that is interconnected with this JTAG block. As more fully described later herein, this circuit is fully JTAG compliant, with the exception of requiring external pull-up resistors on certain signal pins (not depicted) to permit 5v inputs for use in mixed voltage systems.

In addition, Figure 1 depicts that the circuit is interconnected to a plurality of other external blocks. More particularly, Figure 1 depicts a set of external memory blocks. Preferably, the external memory is SDRAM, although clearly, other types of RAM may be so employed. The external memory 300 is described more fully later herein. The incorporation of any or all of these external blocks and/or all or portions of the external memories onto the chip is contemplated by and within the scope of the present invention.

Referring now to Figure 2, it may be seen how the circuitry (`AV310) accepts a transport bitstream from the output of a Forward Error Correction (FEC) device with a maximum throughput of 40 Mbits/s or 7.5 Mbytes/s. The Transport Packet Parser (TPP) in the `AV310 processes the header of each packet and decides whether the packet should be discarded, further processed by ARM CPU, or if the packet only contains relevant data and needs to be stored without intervention from the ARM. The TPP sends all packets requiring further processing or containing relevant data to the internal RAM via the Traffic Controller (TC). The TPP also activates or deactivates the decryption engine (DES) based on the content of an individual packet. The conditional access keys are stored in RAM and managed by special firmware running on the ARM CPU. The data transfer from TPP to SRAM is done via DMA set up by the Traffic Controller (TC).

Further processing on the packet is done by the ARM firmware, which is activated by interrupt from the TPP after the completion of the packet data transfer. Two types of transport packets are stored in the RAM and managed as a first-in first-out (FIFO). One is for pure data which will be routed to SDRAM without intervention from the ARM, and the other is for packets that need further processing. Within the interrupt service routine, the ARM checks the FIFO for packets that need further processing, performs necessary parsing, removes the header portion, and establishes DMA for transferring payload data from RAM to SDRAM. The Traffic Controller repacks the data and gets rid of the voids created by any header removal.

Together with the ARM, the TPP also handles System Clock Reference (SCR) recovery with an external VCXO. The TPP will latch and transfer to the ARM its internal system clock upon the arrival of any packet which may contain system clock information. After further processing on the packet and identifying the system clock, the ARM calculates the difference between the system clock from a bitstream and the actual system clock at the time the packet arrives. Then, the ARM filters the difference and sends it through a Sigma-Delta DAC in the TPP to control an external voltage controlled oscillator (VCXO). During start-up when there is no incoming SCR, the ARM will drive the VCXO to its center frequency.

The TPP will detect packets lost from the transport stream. With error concealment by the audio/video decoder and the redundant header from DSS bitstream, the `AV310 minimizes the effect of lost data.

After removing packet headers and other system related information, both audio and video data is stored in external SDRAM. The video and audio decoders then read the bitstream from SDRAM and process it according to the ISO standards. The chip decodes MPEG-1 and MPEG-2 main profile at main level for video and Layer I and II MPEG-1 and MPEG-2 for audio. Both Video and Audio decoders synchronize their presentation using the transmitted Presentation Time Stamps (PTS). In a Digital Satellite System (DSS), the PTS is transmitted as picture user data in the video bitstream and an MPEG-1 system packet bitstream for audio. Dedicated hardware decodes the PTS if it is in the MPEG-1 system packet and forwards it to the audio decoder. The video decoder decodes PTS from picture user data. Both Video and Audio decoders compare PTS to the local system clock in order to synchronize presentation of reconstructed data. The local system clock is continuously updated by the ARM. That is, every time the System Clock Reference of a selected SCID is received and processed, the ARM will update the decoder system clock.

The Video decoder is capable of producing decimated pictures using 1/2 or 1/4 decimation per dimension, which results in reduced areas of 1/4 or 1/16. The decimated picture can be viewed in real time. Decimation is achieved by using field data out of a frame, skipping lines, and performing vertical filtering to smooth out the decimated image.

When decoding a picture from a digital recorder, the decoder can handle trick modes (decode and display I frame only), with the limitation that the data has to be a whole picture instead of several intra slices. Random bits are allowed in between trick mode pictures. However, if the random bits emulate any start code, it will cause unpredictable decoding and display errors.

Closed Caption (CC) and Extended Data Services (EDS) are transmitted as picture layer user data. The video decoder extracts the CC and EDS information from the video bitstream and sends it to the NTSC/PAL encoder module.

The video decoder also extracts the aspect ratio from the bitstream and sends it to the ARM which prepares data according to the Video Aspect Ratio Identification Signal (VARIS) standard, EIAJ CPX - 1204. The ARM then sends it to the NTSC/PAL encoder and OSD module.

The OSD data may come from the user data in the bitstream or may be generated by the application executed on the ARM. Regardless of the source, the OSD data will be stored in the SDRAM and managed by the ARM. However, there is only limited space in the SDRAM for OSD. Applications that require large quantities of OSD data have to store them in an external memory attached to the Extension Bus. Based on the request from the application, the ARM will turn the OSD function on and specify how and where the OSD will be mixed and displayed along with the normal video sequence. The OSD data can be represented in one of the following forms: bitmap, graphics 4:4:4 component, CCIR 601 4:2:2 component, or just background color. A special, dedicated bitBLT hardware expedites memory block moves between different OSDs.

The conditional access is triggered by the arrival of a Control Word Packet (CWP). The ARM firmware recognizes a CWP has been received and hands it to the Verifier, which is NewsDataCom (NDC) application software running on the ARM. The Verifier reads the CWP and communicates with the external Smart Card through a UART I/O interface. After verification, it passes the pointer to an 8 byte key back to the firmware, which then loads the key for the DES to decrypt succeeding packets.

The 32-bit ARM processor running at 40.5 MHz and its associated firmware provide the following: initialization and management of all hardware modules; service for selected interrupts generated by hardware modules and I/O ports; and application program interface (API) for users to develop their own applications.

All the firmware will be stored in the on-chip 12K bytes ROM, except the OSD graphics and some generic run time support. The 4.5K bytes on-chip RAM provides the space necessary for the `AV310 to properly decode transport bitstreams without losing any packets. The run-time support library (RTSL) and all user application software are located outside the 'AV310. Details of the firmware and RTSL are provided in the companion software specification document.

There are two physical DMA channels managed by the Traffic Controller to facilitate large block transfers between memories and buffers. That is, as long as there is no collision in the source and destination, it is possible to have two concurrent DMA transfers. The detailed description of DMA is provided in the section on the Traffic Controller.

The `AV310 accepts DSS transport packet data from a front end such as a forward error correction (FEC) unit. The data is input 8 bits at a time, using a byte clock, DCLK. PACCLK high signals valid packet data. DERROR is used to indicate a packet that has data errors. The timing diagram in Figure 3 shows the input timing.

The `AV310 includes an interface to the Smart Card access control system. The interface consists of a high speed UART, logic to comply with the News Datacom specification (Document # HU-T052, Release E dated November 1994, and Release F dated January 1996) "Directv Project: Decoder-Smart Card Interface Requirements." Applicable software drivers that control the interface are also included, and are shown in the companion software document.

It should be noted that the `AV310 is a 3.3 volt device, while the Smart Card requires a 5 volt interface. The `AV310 will output control signals to turn the card's VCC and VPP on and off as required, but external switching will be required. It is also possible that external level shifters may be needed on some of the logic signals.

A NTSC/PAL pin selects between an NTSC or a PAL output. Changing between NTSC and PAL mode requires a hardware reset of the device.

The 'AV310 produces an analog S-video signal on two separate channels, the luminance (Y) and the chrominance (C). It also outputs the analog composite (Comp) signal. All three outputs conform to the RS170A standard.

The `AV310 also supports Closed Caption and Extended Data Services. The analog output transmits CC data as ASCII code during the twenty-first video line. The NTSC/PAL encoder module inserts VARIS codes into the 20th video line for NTSC and 23rd line for PAL.

The digital output provides video in either 4:4:4 or 4:2:2 component format, plus the aspect ratio VARIS code at the beginning of each video frame. The video output format is programmable by the user but defaults to 4:2:2. The content of the video could be either pure video or the blended combination of video and OSD.

The pin assignments for the digital video output signals are:

YCOUT(8) 8-bit Cb/Y/Cr/Y and VARIS multiplexed data output
YCCLK(1) 27 MHz or 40.5 MHz clock output
YCCTRL(2) 2-bit control signals to distinguish between Y/Cb/Cr

components and VARIS code

The interpretation of YCCTRL is defined in the following table.

Table 1.

| Digital Output Control | | |
|---|---|---|
| SIGNALS | YCCTRL[1] | YCCTRL[0] |
| Component Y | 0 | 0 |
| Component Cb | 0 | 1 |
| Component Cr | 1 | 0 |
| VARIS code | 1 | 1 |

The aspect ratio VARIS code includes 14 bits of data plus a 6-bit CRC, to make a total of 20 bits. In NTSC the 14-bit data is specified as shown in Table 2

Table 2.

| VARIS Code Specification | | |
|---|---|---|
| | Bit Number | Contents |
| Word0 A | 1 | Communication aspect ratio: 1 = full mode (16:9), 0 = 4:3 |
| | 2 | Picture display system: 1 = letter box, 0 = normal |
| | 3 | Not used |
| Word0 B | 4<br>5<br>6 | Identifying information for the picture<br>and other signals (sound signals) that<br>are related to the picture transmitted simultaneously |
| Word1 | 4-bit range | Identification code associated to Word0 |
| Word2 | 4-bit range | Identification code associated to Word0 and other information |

The 6-bit CRC is calculated, with the preset value to be all 1, based on the equation $G(X) = X^6 + X + 1$.
The 20-bit code is further packaged into 3 bytes according to the following format illustrated in Table X.

Table 3.

| Three Byte VARIS Code | | | | | | | | |
|---|---|---|---|---|---|---|---|---|
| | b7 | b6 | b5 | b4 | b3 | b2 | b1 | b0 |
| 1st Byte | --- | --- | Word0 B | | | Word0 A | | |
| 2nd Byte | Word2 | | | | Word1 | | | |
| 3rd Byte | VID_EN | --- | CRC | | | | | |

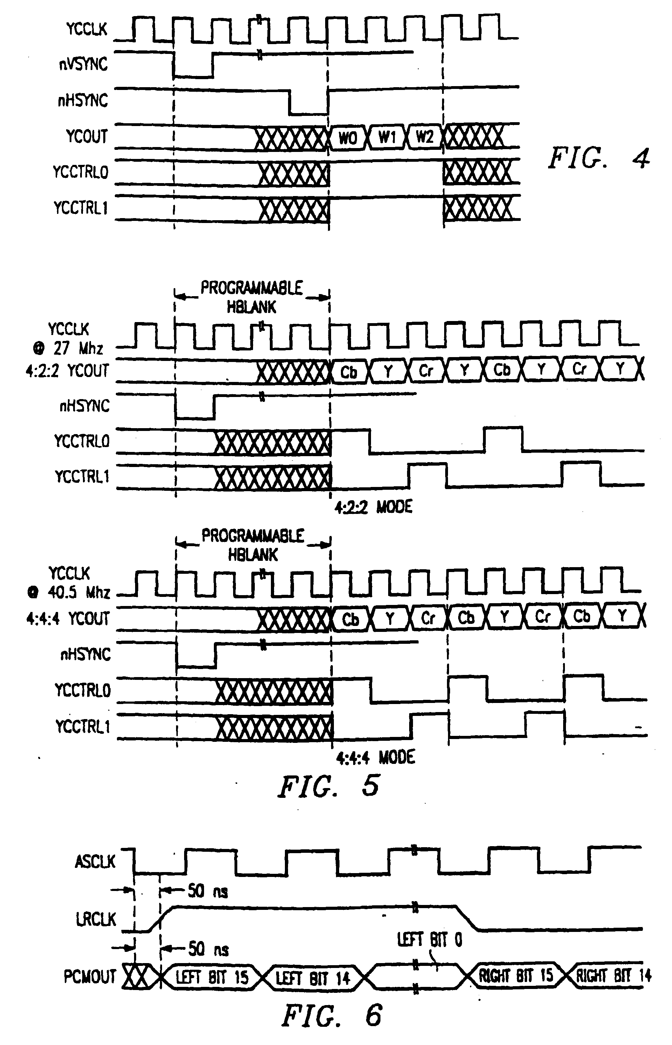

The three byte VARIS code is constructed by the ARM as part of the initialization process. The ARM calculates two VARIS codes corresponding to the two possible aspect ratios. The proper code is selected based on the aspect ratio from the bitstream extracted by the video decoder. The user can set VID_EN to signal the NTSC/PAL encoder to enable (1) or disable (0) the VARIS code. The transmission order is the 1st byte first and it is transmitted during the non-active video line and before the transmission of video data.
The timing of the VARIS output is shown in the following Figure 4. The timing of 4:2:2 and 4:4:4 digital video output is shown in Figure 5.
The PCM audio output from the 'AV310 is a serial PCM data line, with associated bit and left/right clocks.
PCM data is output serially on PCMOUT using the serial clock ASCLK. ASCLK is derived from the PCM clock, PCMCLK, according to the PCM Select bits in the control register. PCM clock must be the proper multiple of the sampling frequency of the bitstream. The PCMCLK may be input to the device or internally derived from an 18.432 MHz clock, depending on the state of the PCM_SRC pin. The data output of PCMOUT alternates between the two channels, as designated by LRCLK as depicted in Figure 6. The data is output most significant bit first. In the case of 18-bit output, the PCM word size is 24 bits. The first six bits are zero, followed by the 18-bit PCM value.

The SPDIF output conforms to a subset of the AES3 standard for serial transmission of digital audio data. The SPDIF format is a subset of the minimum implementation of AES3.

When the PCM_SRC pin is low, the `AV310 generates the necessary output clocks for the audio data, phase locked to the input bitstream. The clock generator requires an 18.432 MHz external VCXO and outputs a control voltage that can be applied to the external loop filter and VCXO to produce the required input. The clock generator derives the correct output clocks, based on the contents of the audio control register bits PCMSEL1-0, as shown in the following table.

Table 4.

| Audio Clock Frequencies | | | | |
|---|---|---|---|---|
| PCMSEL1-0 | Description | LRCLK (KHz) | ASCLK (MHz) | PCMCLK (MHz) |
| 00 | 16 bit PCM, no oversampling | 48 | 1.5360 | 1.5360 |
| 01 | 16 bit PCM, 256 x oversampling | 48 | 1.5360 | 12.288 |
| 10 | 18 bit PCM, no oversampling | 48 | 2.304 | 2.304 |
| 11 | 18 bit PCM, 384 x oversampling | 48 | 2.304 | 18.432 |

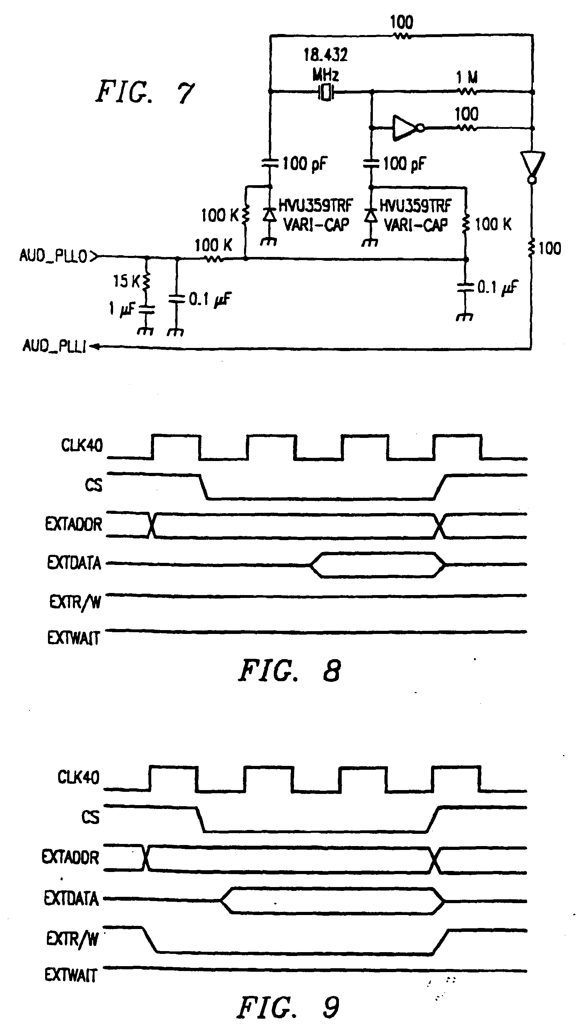

Maximum clock jitter will not exceed 200 ps RMS. An example circuit is shown in Figure 7.

When PCM_SRC is high, the `AV310 expects the correct PCM oversampling clock frequency to be input on PCMCLK.

The SDRAM must be 16-bit wide SDRAM. The `AV310 provides control signals for up to two SDRAMs. Any combination of 4, 8, or 16 Mbit SDRAMs may be used, provided they total at least 16 Mbits. The SDRAM must operate at an 81 MHz clock frequency and have the same timing parameters as the TI TMS626162, a 16 Mbit SDRAM.

The extension bus interface is a 16-bit bi-directional data bus with a 25-bit address for byte access. It also provides 3 external interrupts, each with it's own acknowledge signal, and a wait line. All the external memories or I/O devices are mapped to the 32-bit address space of the ARM. There are seven internally generated Chip Selects (CSx) for EEPROM memory, DRAM, modem, front panel, front end control, parallel output port, and 1394 Link device. Each CS has its own defined memory space and a programmable wait register which has a default value 1. The number of wait states depends on the content of the register, with a minimum of one wait state. The EXTWAIT signal can also be used to lengthen the access time if a slower device exists in that memory space.

The Extension Bus supports the connection of 7 devices using the pre-defined chip selects. Additional devices may be used by externally decoding the address bus. The following table shows the name of the device, its chip select, address range, and programmable wait state. Every device is required to have tri-stated data outputs within 1 clock cycle following the removal of chip-select.

Table 5.

| Extension Bus Chip Select | | | |
|---|---|---|---|
| Chip Select | Byte Address Range | Wait State | Device |
| CS1 | 0200 0000 - 3FF FFFF | 1 - 5 | EEPROM(up to 32 MBytes) |
| CS2 | 0400 0000 - 05FF FFFF | N/A | DRAM (up to 32 MBytes) |
| CS3 | 0600 0000 - 07FF FFFF | 1 - 7 | Modem |
| CS4 | 0800 0000 - 09FF FFFF | 1 - 7 | Front Panel |
| CS5 | 0A00 0000 - OBFF FFFF | 1 - 7 | Front End Device |
| CS6 | 0C00 0000 - ODFF FFFF | 1 - 7 | 1394 Link Device |
| CS7 | 0E00 0000 - OFFF FFFF | 1 - 4 | Parallel Data Port |

CS1 is intended for ARM application code, but writes will not be prevented.

CS2 is read/write accessible by the ARM. It is also accessed by the TC for TPP and bitBLT DMA transfers.

CS3, CS4, CS5, and CS6 all have the same characteristics. The ARM performs reads and writes to these devices through the Extension Bus.

CS7 is read and write accessible by the ARM. It is also accessed by the TC for TPP DMAs, and it is write only. The parallel port is one byte wide and it is accessed via the least significant byte.

The Extension Bus supports connection to external EEPROM, SRAM, or ROM memory and DRAM with its 16-bit data and 25-bit address. It also supports DMA transfers to/from the Extension Bus. DMA transfers within the extension bus are not supported. However, they may be accomplished by DMA to the SRAM, followed by DMA to the extension bus. Extension Bus read and write timing are shown in Figure 8 (read) and Figure 9 (write), both with two programmable wait states. The number of wait state can be calculated by the following formula:

$$\#of\ wait\ states =$$

$$round\_up[((CS\_delay+device\_cycle\_time)/24)-1]$$

For example, the CS_delay on the chip is 20 nsec. A device with 80 nsec read timing will need 4 wait states.

There are three interrupt lines and three interrupt acknowledges in the `AV310. These interrupts and interrupts from other modules are handled by a centralized interrupt handler. The interrupt mask and priority are managed by the firmware. The three extension bus interrupts are connected to three different IRQs. When the interrupt handler on the ARM begins servicing one of these IRQs, it should first issue the corresponding EXTACK signal. At the completion of the IRQ, the ARM should reset the EXTACK signal.

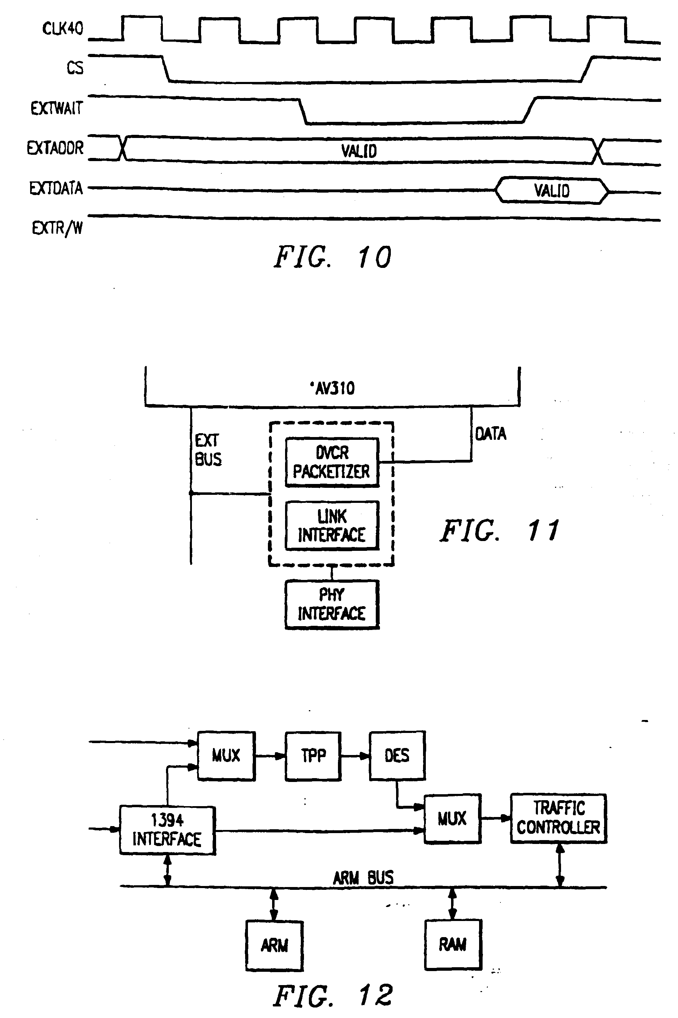

The EXTWAIT signal is an alternative way for the ARM to communicate with slower devices. It can be used together with the programmable wait state, but it has to become active before the programmable wait cycle expires. The total amount of wait states should not exceed the maximum allowed from Table 5. If the combined total wait states exceeds its maximum, the decoder is not guaranteed to function properly. When a device needs to use the EXTWAIT signal, it should set the programmable wait state to at least 2. Since the EXTWAIT signal has the potential to stall the whole decoding process, the ARM will cap its waiting to 490 nanoseconds. Afterwards, the ARM assumes the device that generated the EXTWAIT has failed and will ignore EXTWAIT from then on. Only a software or hardware reset can activate the EXTWAIT signal again. The timing diagram of a read with EXTWAIT signal on is shown in the Figure 10.

The Extension Bus supports access to 70ns DRAM with 2 wait states. The DRAM must have a column address that is 8-bit, 9-bit, or 10-bit. The DRAM must have a data width of 8 or 16 bits. Byte access is allowed even when the DRAM has a 16 bit data width. The system default DRAM configuration is 9-bit column address and 16-bit data width. The firmware will verify the configuration of DRAM during start up.

The `AV310 includes an Inter Integrated Circuit ($I^2C$) serial bus interface that can act as either a master (default) or slave. Only the 'standard mode' (100 kbit/s) $I^2C$-bus system is implemented; 'fast mode' is not supported. The interface uses 7-bit addressing. When in slave mode, the address of the `AV310 is programmed by the API.

Timing for this interface matches the standard timing definition of the $I^2C$ bus.

The `AV310 includes two general purpose 2-wire UARTs that are memory mapped and fully accessible by application programs. The UARTs operate in asynchronous mode only and support baud rates of 1200, 2400, 4800, 9600, 14400, 19200 and 28800 kbps. The outputs of the UARTs are digital and require external level shifters for RS232 compliance.

The IR, RF, and SIRCSI ports require a square wave input with no false transitions; therefore, the signal must be thresholded prior to being applied to the pins. The interface will accept an IR, RF, or SIRCSI data stream up to a frequency of 1.3 KHz. Although more than one may be active at any given time, only one IR, RF, or SIRCSI input will be decoded. Decoding of the IR, RF, and SIRCSI signals will be done by a combination of hardware and software. See the Communications Processor Module for further details.

SIRCSO outputs the SIRCSI or IR input or application-generated SIRCSO codes.

The `AV310 provides a dedicated data interface for 1394. To complete the implementation, the `AV310 requires an external packetizer, Link layer, and Physical layer devices. Figure 11 depicts the connection.

The control/command to the packetizer or the Link layer interface device is transmitted via the Extension Bus. The 1394 data is transferred via the 1394 interface which has the following 14 signals:

Table 6.

| 1394 Interface Signals | | |
|---|---|---|
| Signal | I/ | Description |
| PDATA (8) | I/ | 8 bit data |
| PWRITE | O | if PWRITE is hiqh (active) the `AV310 |

Table 6.   (continued)

| 1394 Interface Signals | | |
|---|---|---|
| Signal | I/ | Description |
| PPACEN | I/ | asserted at the beqinninq of a packet |
| PREADREQ | I | asserted (active hiqh) if the Link |
| PREAD (1) | O | if PREAD is hiqh (active) the `AV310 |
| CLK40 (1) | O | 40.5 MHz clock. Wait states can be used |
| PERROR | I/ | indicates a packet error |

In recording mode, the `AV310 will send either encrypted or clean packets to the 1394 interface. The packet is transferred as it comes in. When recording encrypted data, the TPP will send each byte directly to the 1394 interface and bypass the DES module. In the case of recording decrypted data, the TPP will send the packet payload to the DES module, then forward a block of packets to the 1394 interface. The interface sends the block of packets out byte by byte. No processing will be done to the packet during recording, except setting the encrypt bit to the proper state. In particular, the TPP will not remove CWP from the Auxiliary packet. During playback mode, the packet coming from the interface will go directly into the TPP module. Figure 12 shows the functional block diagram of the data flow between the TPP, DES, and 1394 interface. The packet coming out from TPP can go either to the 1394 interface or to the RAM through Traffic Controller, or to both places at the same time. This allows the `AV310 to decode one program while recording from 1 to all 32 possible services from a transponder.

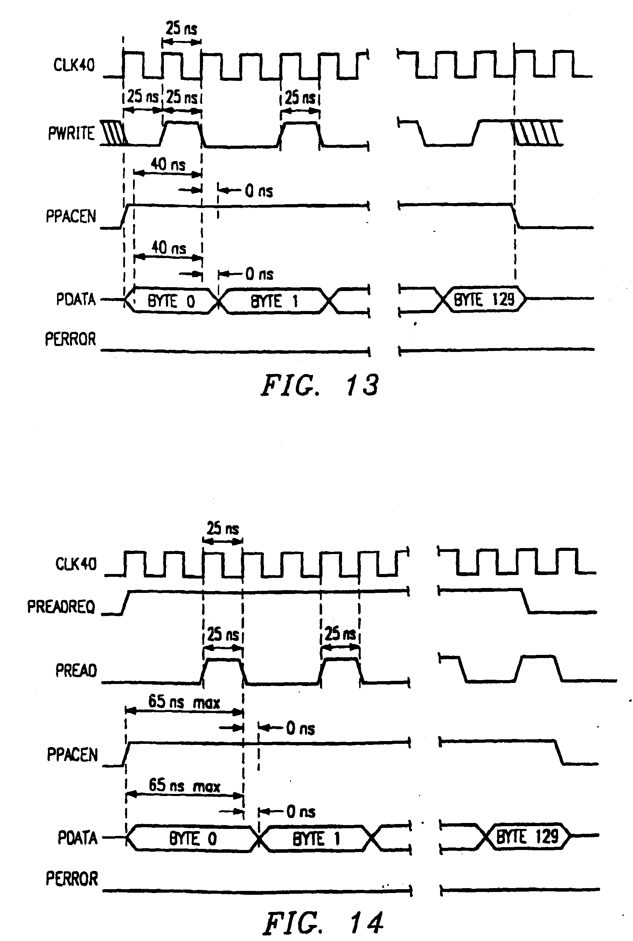

Figure 13 and Figure 14 depict the read and write timing relationships on the 1394 interface.

During recording, if the DERROR signal from the front end interface goes high in the middle of a packet, it is forwarded to the PERROR pin. If DERROR becomes active in between packets, then a PERROR signal will be generated during the transfer of the next packet for at least one PDATA cycle.

During playback mode, the external 1394 device can only raise the PERROR signal when the PPACEN is active to indicate either error(s) in the current packet or that there are missing packet(s) prior to the current one. PERROR is ignored unless the PPACEN is active. The PERROR signal should stay high for at least two PCLK cycles. There should be at most one PERROR signal per packet.

The 'AV310 requires a hardware reset on power up. Reset of the device is initiated by pulling the RESET pin low, while the clock is running, for at least 100 ns. The following actions will then occur: input data on all ports will be ignored; external memory is sized; data pointers are reset; all modules are initialized and set to a default state: the TPP tables are initialized; the audio decoder is set for 16 bit output with 256 x oversampling; the OSD background color is set to blue and video data is selected for both the analog and digital outputs; MacroVision is disabled; and the I$^2$C port is set to master mode.

When the reset sequence is finished, the device will begin to accept data. All data input prior to the end of the reset sequence will be ignored.

JTAG boundary scan is included in the `AV310. Five pins (including a test reset) are used to implement the IEEE 1149.1 (JTAG) specification. The port includes an 8-bit instruction register used to select the instruction. This register is loaded serially via the TDI input. Four instructions are supported, all others are ignored: Bypass; Extest; Intest and Sample.

Timing for this interface conforms to the IEEE 1149.1 specification.

Features of the ARM/CPU module: runs at 40.5 MHz; Supports byte (8-bit), half-word (16-bit), and word (32-bit) data types; reads instructions from on-chip ROM or from the Extension Bus; can switch between ARM (32-bit) or Thumb (16-bit) instruction mode; 32-bit data and 32-bit address lines; 7 processing modes; and two interrupts, FIQ and IRQ.

The CPU in the `AV310 is a 32 bit RISC processor, the ARM7TDMI/ Thumb, which has the capability to execute instructions in 16 or 32 bit format at a clock frequency of 40.5 MHz. The regular ARM instructions are exactly one word (32-bit) long, and the data operations are only performed on word quantities. However, LOAD and STORE instructions can transfer either byte or word quantities.

The Thumb uses the same 32 bit architecture with an 16-bit instruction set. That is, it retains the 32-bit performance but reduces the code size with 16-bit instructions. With 16-bit instruction, Thumb still gives 70 - 80% of the performance of the ARM when running ARM instructions from 32-bit memory. In this document, ARM and Thumb are used interchangeably.

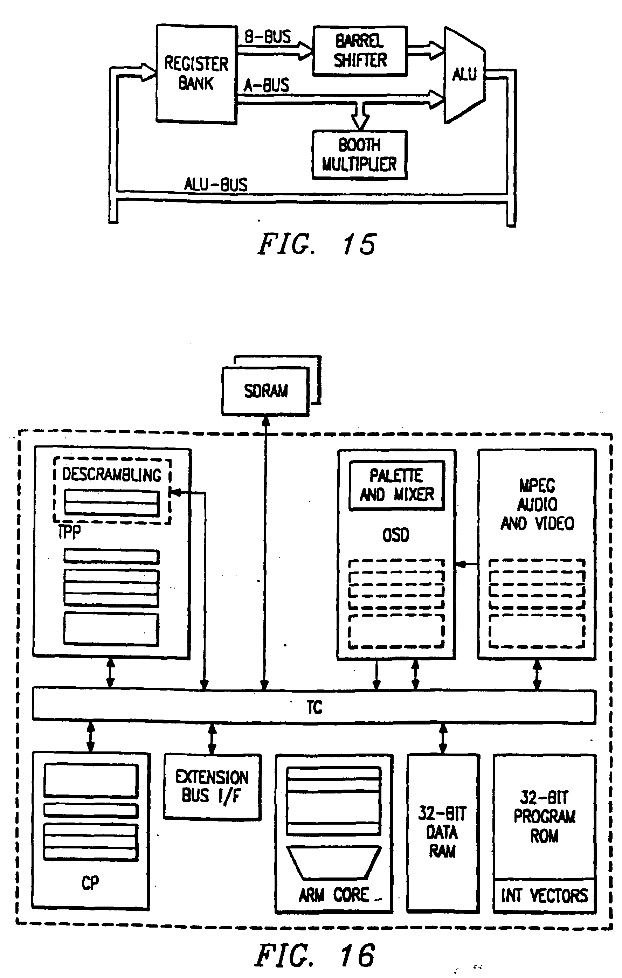

ARM uses a LOAD and STORE architecture, i.e. all operations are on the registers. ARM has 6 different processing modes, with 16 32-bit registers visible in user mode. In the Thumb state, there are only 8 registers available in user mode. However, the high registers may be accessed through special instructions. The instruction pipeline is three stage, fetch → decode → execute, and most instructions only take one cycle to execute. Figure 15 shows the data path of ARM processor core.

The ARM CPU is responsible for managing all the hardware and software resources in the 'AV310. At power up the ARM will verify the size of external memory. Following that, it will initialize all the hardware modules by setting up control registers, tables, and reset data pointers. It then executes the default firmware from internal ROM. A set of run-time library routines provides the access to the firmware and hardware for user application programs. The application programs are stored in external memory attached to the Extension Bus.

During normal operation the ARM constantly responds, based on a programmable priority, to interrupt requests from any of the hardware modules and devices on the Extension Bus. The kind of interrupt services include transport packet parsing, program clock recovery, traffic controller and OSD service requests, service or data transfer requests from the Extension Bus and Communication Processor, and service requests from the Audio/Video decoder.

Features of the Traffic Controller Module: manages interrupt requests; authorizes and manages DMA transfers; provides SDRAM interface; manages Extension Bus; provides memory access protection; manages the data flow between processors and memories: TPP/DES to / from internal Data RAM; Data RAM to/from Extension Bus; SDRAM to OSD; OSD to/from Data RAM; Audio/ Video Decoder to/from SDRAM; and SDRAM to/from Data RAM. Generates chip selects (CS) for all internal modules and devices on the Extension Bus; generates programmable wait states for devices on the Extension Bus; and provides 3 breakpoint registers and 64 32-bit patch RAM.

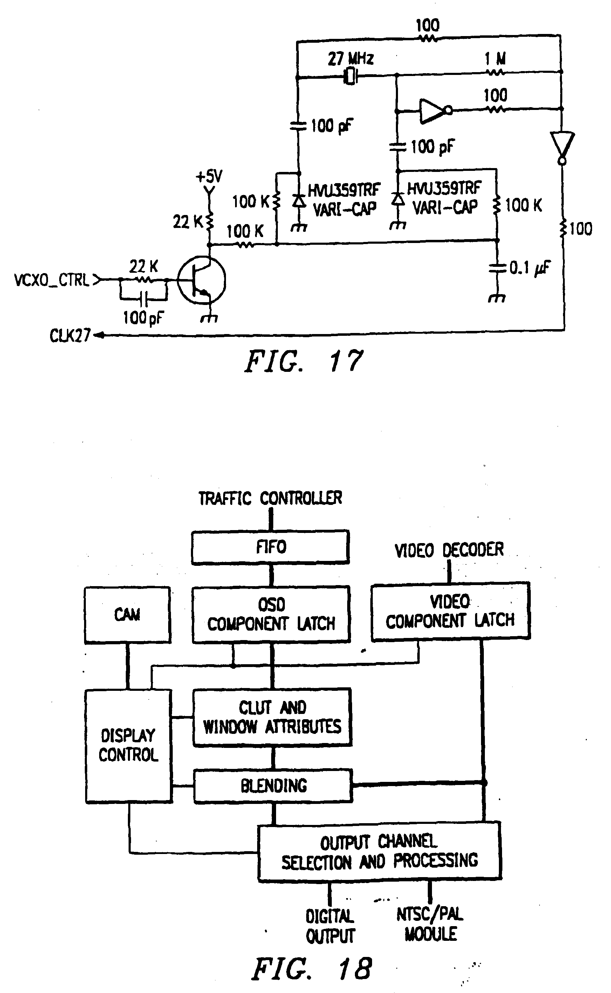

Figure 16 depicts the data flow managed by the Traffic Controller.

The SDRAM interface supports 12 nanoseconds 16-bit data width SDRAM. It has two chip selects that allow connections to a maximum of two SDRAM chips. The minimum SDRAM size required by the decoder is 16 Mbit. Other supported sizes and configurations are:

16 Mbit → one 16 Mbit SDRAM

20 Mbit → one 16 Mbit and one 4 Mbit SDRAM

24 Mbit → one 16 Mbit and one 8 Mbit SDRAM

32 Mbit → two 16 Mbit SDRAM

The access to the SDRAM can be by byte, half word, single word, continuous block, video line block, or 2D macroblock. The interface also supports decrement mode for bitBLT block transfer.

The two chip selects correspond to the following address ranges:

SCS1 → 0xFE00 0000 - 0xFE1F FFFF

SCS2 → 0xFE20 0000 - 0xFE3F FFFF

During decoding, the `AV310 allocates the 16 Mbit SDRAM for NTSC mode according to Table 7.

Table 7.

| Memory Allocation of 16 Mbit SDRAM (NTSC) | | |
|---|---|---|
| Starting Byte Address | Ending Byte Address | Usage |
| 0x000000 | 0x0003FF | Pointers |
| 0x000400 | 0x000FFF | Tables and FIFOs |
| 0x001000 | 0x009FFF | Video Microcode (36,864 bytes) |

Table 7. (continued)

| Memory Allocation of 16 Mbit SDRAM (NTSC) | | |
|---|---|---|
| Starting Byte Address | Ending Byte Address | Usage |
| 0x00A000 | 0x0628FF | Video Buffer (2,902,008 bits)* |
| 0x062900 | 0x0648FF | Audio Buffer (65,536 bits) |
| 0x064900 | 0x0E31FF | First Reference Frame (518,400 bytes) |
| 0x0E3200 | 0x161CFF | Second Reference Frame (518,400 bytes) |
| 0x161D00 | 0x1C9DFF | B Frame (426,240 bytes, 0.82 frames) |
| 0x1C9E00 | 0x1FFFFF | OSD or other use (222,210 bytes)* |

* These values are for the current DSS specification. In the latest proposed specification, the VBV buffer size is reduced to 1,835,008 bits, giving 355,586 bytes for OSD or other use.

However, it is also within the scope of the present invention to put the VBV buffer in optional memory on the extension bus 300 and thereby free up the SDRAM memory by the amount of the VBV buffer. This means that the SDRAM is allocated in a different manner than that of Table 7; that is the OSD memory size may be expanded or any of the other blocks expanded.

Interrupt requests are generated from internal modules like the TPP, OSD, A/V decoder and Communication Processor, and devices on the Extension Bus. Some of the requests are for data transfers to internal RAM, while others are true interrupts to the ARM CPU. The Traffic Controller handles data transfers, and the ARM provides services to true interrupts. The interrupts are grouped into FIQ and IRQ. The system software will use FIQ, while the application software will use IRQ. The priorities for FIQs and IRQs are managed by the firmware.

The SDRAM is used to store system level tables, video and audio bitstreams, reconstructed video images, OSD data, and video decoding codes, tables, and FIFOs. The internal Data RAM stores temporary buffers, OSD window attributes, keys for conditional access, and other tables and buffers for firmware. The TC manages two physical DMA channels, but only one of them, the General Purpose DMA, is visible to the user. The user has no knowledge of the DMAs initiated by the TPP, the video and audio decoder, and the OSD module. The General Purpose DMA includes ARM-generated and bitBLT-generated DMAs. The TC can accept up to 4 general DMAs at any given time. Table 8 describes the allowable General Purpose DMA transfers.

Table 8.

| DMA Sources and Destinations | | | |
|---|---|---|---|
| DMA Transfer | | | |
| | SDRAM | Data RAM | Extension Bus |
| SDRAM | NO | YES | NO |
| Data RAM | YES | NO | YES |
| Extension Bus | NO | YES | NO |
| Note that there is no direct DMA transfer to/from the Extension Bus memories from/to the SDRAM. However, the user can use the bitBLT hardware which uses Data RAM as intermediate step for this purpose. The only constraint is the block being transferred has to start at a 32-bit word boundary. | | | |

Features of the TPP Module: parses transport bitstreams; accepts bitstream either from the front end device or from the 1394 interface; performs System Clock Reference (SCR) recovery; supports transport stream up to 40 Mbits-per-second; accepts 8-bit parallel input data; supports storage of 32 SCID; lost-packet detection; provides decrypted or encrypted packets directly to the 1394 interface; and internal descrambler for DSS with the Data Encryption Standard (DES) implemented in hardware.

The TPP accepts packets byte by byte. Each packet contains a unique ID, SCID, and the TPP extracts those packets containing the designated ID numbers. It processes the headers of transport packets and transfers the payload or auxiliary packets to the internal RAM via the DES hardware and Traffic Controller. Special firmware running on the ARM handles DES key extraction and activates DES operation. The ARM/CPU performs further parsing on auxiliary packets stored in the internal RAM. The ARM and TPP together also perform SCR clock recovery. Figure 17 is an example circuit for the external VCXO. The output from the 'AV310 is a digital pulse with 256 levels.

The Conditional Access and DES block is part of the packet header parsing function. A CF bit in the header indicates whether the packet is clean or has been encrypted. The clean packet can be forwarded to the internal RAM directly, while the encrypted one needs to go through the DES block for decryption. The authorization and decryption key information are transmitted via Control Word Packet (CWP). An external Smart Card guards this information and provides the proper key for the DES to work.

The 1394 interface is directly connected to the TPP/DES module. At the command of the user program, the TPP/DES can send either clean or encrypted packets to the 1394 interface. The user can select up to 32 services to record. If the material is encrypted, the user also needs to specify whether to record clean or encrypted video. In recording mode, the TPP will appropriately modify the packet header if decrypted mode is selected; in encrypted mode, the packet headers will not be modified. During the playback mode, the 1394 interface forwards each byte as it comes in to the TPP. The TPP parses the bitstream the same way it does data from the front end.

Features of Video Decoder Module: Real-time video decoding of MPEG-2 Main Profile Main level and MPEG-1; error detection and concealment; internal 90 KHz/27 MHz System Time Clock; sustained input rate of 16 Mbps; supports Trick Mode with full trick mode picture; provides 1/4 and 1/16 decimated size picture; extracts Closed Caption and other picture user data from the bitstream; 3:2 pulldown in NTSC mode; and supports the following display format with polyphase horizontal resampling and vertical chrominance filtering

Table 9.

| Supported Video Resolutions | | | |
|---|---|---|---|
| NTSC (30 Hz) | | PAL (25 HZ) | |
| Source | Display | Source | Display |
| 720 x 480 | 720 x 480 | 720 x 576 | 720 x 576 |
| 704 x 480 | 720 x 480 | 704 x 576 | 720 x 576 |
| 544 x 480 | 720 x 480 | 544 x 576 | 720 x 576 |
| 480 x 480 | 720 x 480 | 480 x 576 | 720 x 576 |
| 352 x 480 | 720 x 480 | 352 x 576 | 720 x 576 |
| 352 x 240 | 720 x 480 | 352 x 288 | 720 x 576 |
| Pan-and-scan for 16:9 source material according to both DSS and MPEG syntax; high level command interface; and synchronization using Presentation Time Stamps (PTS). | | | |

The Video Decoder module receives a video bitstream from SDRAM. It also uses SDRAM as its working memory to store tables, buffers, and reconstructed images. The decoding process is controlled by a RISC engine which accepts high level commands from the ARM. In that fashion, the ARM is acting as an external host to initialize and control Video Decoder module. The output video is sent to the OSD module for further blending with OSD data.

Besides normal bitstream decoding, the Video decoder also extracts from the picture layer user data the Closed Caption (CC), the Extended Data Services (EDS), the Presentation Time Stamps (PTS) and Decode Time Stamps, the pan_and_scan, the fields display flags, and the no_burst flag. These data fields are specified by the DSS. The CC and EDS are forwarded to the NTSC/PAL encoder module and the PTS is used for presentation synchronization. The other data fields form a DSS-specific constraints on the normal MPEG bitstream, and they are used to update information obtained from the bitstream.

When the PTS and SCR (System Clock Reference) do not match within tolerance, the Video decoder will either redisplay or skip a frame. At that time, the CC/EDS will be handled as follows: if redisplaying a frame, the second display will not contain CC/EDS; if skipping a frame, the corresponding CC/EDS will also be skipped. During trick mode decoding, the video decoder repeats the following steps: searches for a sequence header followed by an I picture; ignores the video buffer underflow error; and continuously displays the decoded I frame.

Note that trick mode I frame data has to contain the whole frame instead of only several intra slices.

The Video decoder accepts the high level commands detailed in Table 10.

Table 10

| Video Decoder Commands | |
|---|---|
| Play | normal decoding |

Table 10   (continued)

| Video Decoder Commands | |
|---|---|
| Freeze | normal decoding but continue to display the last picture |
| Stop | stops the decoding process. The display continue with the last picture |
| Scan | searches for the first I picture, decodes it, continuously displays it, and flushes the buffer |
| NewChannel | for channel change. This command should be preceded by a Stop command. |
| Reset | halts execution of the current command. The bitstream buffer is flushed and the video decoder performs an internal reset |
| Decimate1/2 | continue normal decoding and displaying of a 1/2 x 1/2 decimated picture (used by OSD API) |
| Decimate1/4 | continue normal decoding and displaying of a 1/4 x 1/4 decimated picture (used by OSD API) |

The following table shows the supported aspect ratio conversions.

Table 11.

| Aspect Ratio Conversions | | |
|---|---|---|
| | Display | |
| Source | 4:3 | 16:9 |
| 4:3 | YES | NO |
| 16:9 | PAN-SCAN | YES |

The Pan-Scan method is applied when displaying a 16:9 source video on a 4:3 device. The Pan-Scan location specifies to the 1, 1/2, or 1/4 sample if the source video has the full size, 720/704 x 480. If the sample size is smaller than full then the Pan-Scan location only specifies to the exact integer sample. Note that the default display format output from 'AV310 is 4:3. Outputting 16:9 video is only available when the image size is 720/704 x 480. A reset is also required when switching between a 4:3 display device and a 16:9 one.

The 1/2 and 1/4 decimation, in each dimension, is supported for various size images in 4:3 or 16:9 format. The following table provides the details.

Table 12.

| Decimation Modes | | | | | | |
|---|---|---|---|---|---|---|
| Sample Size | Source | | | | | |
| | 4:3 | | | 16:9 | | |
| | Full | 1/2 | 1/4 | Full | 1/2 | 1/4 |
| 720/704 x 480 | YES | YES | YES | YES | YES | YES |
| 544 x 480 | YES | YES | YES | YES | YES | YES |
| 480 x 480 | YES | YES | YES | YES | YES | YES |
| 352 x 480 | YES | YES | YES | YES | YES | YES |
| 352 x 240 | YES | YES | YES | NO | NO | NO |

Features of the audio decoder module: decodes MPEG audio layers 1 and 2; supports all MPEG-1 and MPEG-2 data rates and sampling frequencies, except half frequency; provides automatic audio synchronization; supports 16- and 18-bit PCM data; outputs in both PCM and SPDIF formats; generates the PCM clock or accepts an external source; provides error concealment (by muting) for synchronization or bit errors; and provides frame-by-frame status information.

The audio module receives MPEG compressed audio data from the traffic controller, decodes it, and outputs audio samples in PCM format. The ARM CPU initializes/controls the audio decoder via a control register and can read status information from the decoder's status register.

Audio frame data and PTS information is stored in the SDRAM in packet form. The audio module will decode the packet to extract the PTS and audio data.

The ARM can control the operation of the audio module via a 32-bit control register. The ARM may reset or mute the audio decoder, select the output precision and oversampling ratio, and choose the output format for dual channel mode. The ARM will also be able to read status information from the audio module. One (32-bit) register provides the MPEG header information and sync, CRC, and PCM status.

The audio module has two registers: a read/write control register and a read-only status register. The registers are defined below.

Table 13.

| Audio Module Registers | | |
|---|---|---|
| Register # | Location | Description |
| 0 | 31:6 | Reserved (set to 0) |
| (Control Register - R/W) | 5:4 | PCM Select<br><br>00 = 16 bit, no oversampling<br><br>01 = 16 bit, 256 x oversampling<br><br>10 = 18 bits, no oversampling<br><br>11 = 18 bits, 384 x oversampling |
| | 3:2 | Dual Channel Mode Output Mode Select<br><br>00 = Ch 0 on left, Ch 1 on right<br><br>01 = Ch 0 on both left and right<br><br>10 = Ch 1 on both left and right<br><br>11 = Reserved |
| | 1 | Mute<br><br>0 = Normal operation<br><br>1 = Mute audio output |
| | 0 | Reset<br><br>0 = Normal operation<br><br>1 = Reset audio module |

Table 13. (continued)

| Audio Module Registers | | |
| --- | --- | --- |
| Register # | Location | Description |
| 1<br>(Status Register - R only) | 31 | Stereo Mode<br>0 = all other<br>1 = dual mode |
| | 30:29 | Sampling Frequency<br>00 = 44.1 KHz<br>01 = 48 KHz<br>10 = 32 KHz<br>11 = Reserved |
| | 28:27 | De-emphasis Mode<br>00 = None<br>01 = 50/15 microseconds<br>10 = Reserved<br>11 = CCITT J.17 |
| | 26 | Synchronization Mode<br>0 = Normal operation<br>1 = Sync recovery mode |
| | 25 | CRC Error<br>0 = No CRC error or CRC not enabled in bitstream<br>1 = CRC error found |
| | 24 | PCM Underflow<br>0 = Normal operation<br>1 = PCM output underflowed |
| | 23:4 | Bits 19-0 of the MPEG header |
| | 3:0 | Version number of the audio decoder |

Features of the OSD module: supports up to 8 hardware windows, one of which can be used for a cursor; all the non-overlapped windows can be displayed simultaneously; overlapped windows are displayed obstructively with the highest priority window on top; provides a hardware window-based rectangle cursor with programmable size and blinking frequency; and provides a programmable background color, which defaults to blue; supports 4 window formats (empty window for decimated video; bitmap; YCrCb 4:4:4 graphics component; and YCrCb 4:2:2 CCIR 601 component); supports blending of bitmap, YCrCb 4:4:4, or YCrCb 4:2:2 with motion video and with an empty window; supports window mode and color mode blending; provides a programmable 256 entries Color Look Up table; outputs motion video or mixture with OSD in a programmable 422 or 444 digital component format; provides motion video or mixture with OSD to the on-chip NTSC/PAL encoder and provides graphics acceleration capability with bitBLT hardware Each hardware window has the following attributes: window position (any even pixel horizontal position on screen; windows with decimated video have to start from an even numbered video line also); window size: from 2 to 720 pixel wide (even values only) and 1 to 576 lines; window base address; data format (bitmap, YCrCb 4:4:4, YCrCb 4:2:2, and empty); bitmap resolution (1, 2, 4, and 8 bits per pixel); full or half resolution for bitmap and YCrCb 4:4:4 windows; bitmap color palette base address; blend enable flag; 4 or 16 levels of blending; transparency enable flag for YCrCb 4:4:4 and YCrCb 4:2:2; and output channel control.

The OSD module is responsible for managing OSD data from different OSD windows and blending them with the video. It accepts video from the Video Decoder, reads OSD data from SDRAM, and produces one set of video output to the on-chip NTSC/PAL Encoder and another set to the digital output that goes off the chip. The OSD module defaults to standby mode, in which it simply sends video from the Video Decoder to both outputs. After being activated by the ARM CPU, the OSD module, following the window attributes set up by the ARM, reads OSD data and mixes it with the video output. The ARM CPU is responsible for turning on and off OSD operations. The bitBLT hardware which is attached to the OSD module provides acceleration to memory block moves and graphics operations. Figure 18 shows the block diagram of the OSD module. The various functions of the OSD are described in the following subsections.

The OSD data has variable size. In the bitmap mode, each pixel can be 1, 2, 4, or 8 bits wide. In the graphics YCrCb 4:4:4 or CCIR 601 YCrCb 4:2:2 modes, it takes 8-bit per components, and the components are arranged according to 4:4:4 (Cb/Y/Cr/Cb/Y/Cr) or 4:2:2 (Cb/Y/Cr/Y) format. In the case where RGB graphics data needs to be used as OSD, the application should perform software conversion to Y/Cr/Cb before storing it. The OSD data is always packed into 32-bit words and left justified. Starting from the upper left corner of the OSD window, all data will be packed into adjacent 32-bit words. The dedicated bitBLT hardware expedites the packing and unpacking of OSD data for the ARM to access individual pixels, and the OSD module has an internal shifter that provides pixel access.

In NTSC mode, the available SDRAM is able to store one of the following OSD windows with the size listed in Table 14, with the current and proposed VBV buffer size for DSS.

Table 14.

| SDRAM OSD Window Size | | |
| --- | --- | --- |
| | 720 x 480 frames | |
| bits/pixel | Current | Proposed |
| 24 | 0.21 | 0.34 |
| 8 | 0.64 | 1.03 |
| 4 | 1.29 | 2.06 |
| 2 | 2.58 | 4.12 |

An OSD window is defined by its attributes. Besides storing OSD data for a window into SDRAM, the application program also needs to update window attributes and other setup in the OSD module as described in the following subsections.

The CAM memory contains X and Y locations of the upper left and lower right corners of each window. The application program needs to set up the CAM and enable selected OSD windows. The priority of each window is determined by its location in the CAM. That is, the lower address window always has higher priority. In order to swap the priority of windows, the ARM has to exchange the locations within the CAM.

The OSD module keeps a local copy of window attributes. These attributes allow the OSD module to calculate the address for the OSD data, extract pixels of the proper size, control the blending factor, and select the output channel.

Before using bitmap OSD the application program has to initialize the 256 entry color look up table (CLUT). . The CLUT is mainly used to convert bitmap data into Y/Cr/Cb components. Since bitmap pixels can have either 1, 2, 4, or 8 bits, the whole CLUT can also be programmed to contain segments of smaller size tables, such as sixteen separate, 16-entry CLUTs.

There are two blending modes. The window mode blending applies to OSD window of type bitmap, YCrCb 4:4:4, and YCrCb 4:2:2. The color mode, pixel by pixel, blending is only allowed for the bitmap OSD. Blending always blends OSD windows with real time motion video. That is, there is no blending among OSD windows except the empty window that contains decimated motion video. In case of overlapping OSD windows the blending only occurs between the top OSD window and the video. The blending is controlled by the window attributes, Blend_En (2-bit), Blend Level (4-bit), and Trans_En (1-bit). Blend_En activates blending as shown in Table 15. In window mode all pixels are mixed with the video data based on the level defined by the attributes Blend Level. In the color mode the blending level is provided in the CLUT. That is, the least significant bit of Cb and Cr provides the 4 level blending, while the last two bits from Cb and Cr provide the 16 level blending. Transparency level, no OSD but only video, is achieved with the Trans_En bit on and the OSD pixel containing all 0s.

Table 15.

| OSD Blending Control | |
| --- | --- |
| Blend_En | Blending modes |
| 00 | Disable Blending |
| 01 | 4 Level Color Blending |

Table 15.   (continued)

| OSD Blending Control | |
|---|---|
| Blend_En | Blending modes |
| 10 | 16 Level Color Blending |
| 11 | Window Mode Blending |

A rectangular blinking cursor is provided using hardware window 0. With window 0, the cursor always appears on top of other OSD Windows. The user can specify the size of the cursor via window attribute. The activation of the cursor, its color, and blinking frequency are programmable via control registers. When hardware window 0 is designated as the cursor, only seven windows are available for the application. If a hardware cursor is not used, then the application can use window 0 as a regular hardware window.

After the OSD windows are activated, each of them has an attribute, Disp_Ch_Cntl[1,0], that defines the contents of the two output channels (the analog and digital video outputs) when the position of that window is currently being displayed. The following table shows how to control output channels.

Table 16.

| OSD Module Output Channel Control | | | |
|---|---|---|---|
| Disp_Ch_cntl[1] | Disp_Ch_cntl[0] | Channel 1 Digital Video Output | Channel 0 To NTSC/PAL Encoder |
| 0 | 0 | MPEG Video | MPEG Video |
| 0 | 1 | MPEG Video | Mixed OSD_Window |
| 1 | 0 | Mixed OSD_Window | MPEG Video |
| 1 | 1 | Mixed OSD_Window | Mixed OSD_Window |

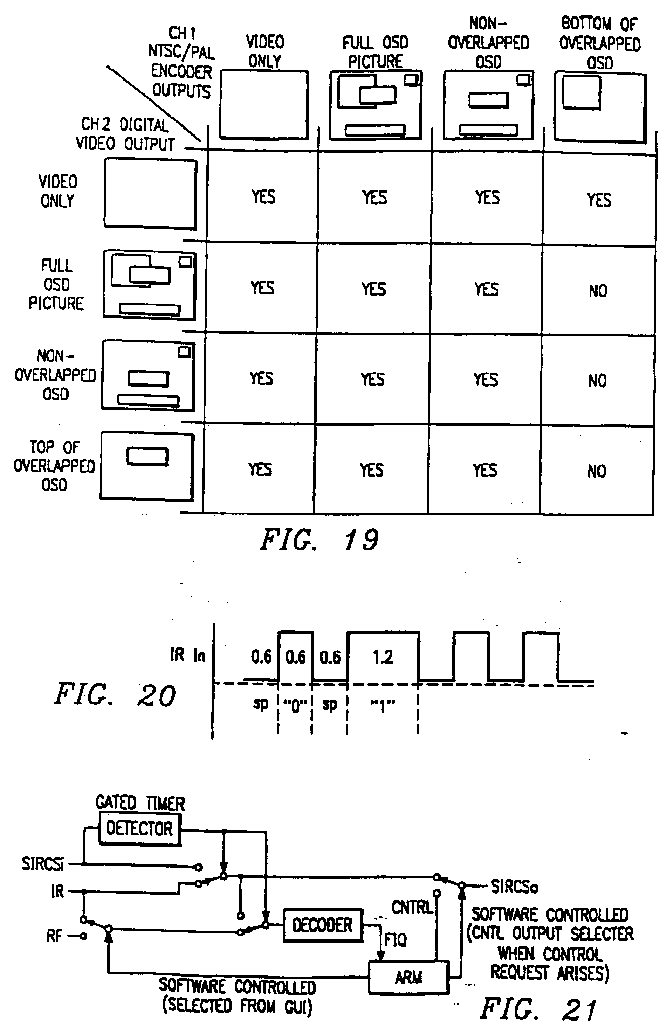

Example displays of these two output channels are shown in Figure 19.

The bitBLT hardware provides a faster way to move a block of memory from one space to the other. It reads data from a source location, performs shift/mask/merge/expand operations on the data, and finally writes it to a destination location. This hardware enables the following graphics functions: Set/Get Pixel; Horizontal/Vertical Line Drawing; Block Fill; Font BitBLTing; Bitmap/graphic BitBLTing; and Transparency.

The allowable source and destination memories for bitBLT are defined in Table 17.

Table 17.

| Source and Destination Memories for BitBLT | | |
|---|---|---|
| Source Memory | Destination Memory | |
| | SDRAM | Ext_Bus Memory |
| SDRAM | YES | YES |
| Ext_Bus Memory | YES | YES |

The types of source and destination OSD windows supported by the bitBLT are the given in the following table (the HR stands for half resolution).

Table 18.

| Allowable BitBLT Window Formats | | | | | |
|---|---|---|---|---|---|
| Source OSD Window | Destination OSD Window | | | | |
| | YCrCb 4:4:4 | YCrCb 4:4:4_H R | YCrC b 4:2: 2 | Bitma p | Bitmap_ HR |
| YCrCb 4:4:4 | YES | YES | NO | NO | NO |
| YCrCb 4:4:4_HR | YES | YES | NO | NO | NO |
| YCrCb 4:2:2 | NO | NO | YES | NO | NO |

Table 18.   (continued)

| Allowable BitBLT Window Formats | | | | | |
|---|---|---|---|---|---|
| Source OSD Window | Destination OSD Window | | | | |
| | YCrCb 4:4:4 | YCrCb 4:4:4_H R | YCrC b 4:2: 2 | Bitma p | Bitmap_ HR |
| Bitmap | YES | YES | NO | YES | YES |
| Bitmap_HR | YES | YES | NO | YES | YES |

Since the bitmap allows resolutions of 1, 2, 4, or 8 bits per pixel, the bitBLT will drop the MSB bits or pad it with 0s when swapping between windows of different resolution. For half-resolution OSD, the horizontal pixel dimension must be even numbers. For YCrCb 4:2:2 data, the drawing operation is always on 32-bit words, two adjacent pixels that align with the word boundary.

In a block move operation, the block of data may also be transparent to allow text or graphic overlay. The pixels of the source data will be combined with the pixels of the destination data. When transparency is turned on and the value of the source pixel is non-zero, the pixel will be written to the destination. When the value of the pixel is zero, the destination pixel will remain unchanged. Transparency is only allowed from bitmap to bitmap, and from bitmap to YCrCb 4:4:4.

Features of NTSC/PAL Encoder module: supports NTSC and PAL B, D, G/H, and I display formats; outputs Y, C, and Composite video with 9-bit DACs; complies to the RS170A standard; supports MacroVision Anti-taping function; provides Closed Caption, Extended Data Services, and aspect ratio VARIS encoding; and provides sync signals with option to accept external sync signals.

This module accepts from the OSD module the video data that may have been blended with OSD data and converts it to Y, C, and Composite analog outputs. The Closed Caption and Extended Data Services data are provided by the Video decoder through a serial interface line. These data are latched into corresponding registers. The CC encoder sends out Closed Caption data at video line 21 and Extended Data Services at video line 284. The ARM initializes and controls this module via the ARM Interface block. It also sends VARIS code to the designated registers which is then being encoded into video line 20. The ARM also turns on and off MacroVision through the ARM Interface block. The default state of MacroVision is off.

Features of the Communications Processor module; provides two programmable timers; provides 3 UARTs - one for Smart Card and two for general use; accepts IR, SIRCSI and RF signals; provides a SIRCSO output; provides two general purpose I/Os; and manages I$^2$C and JTAG interfaces.

This module contains a collection of buffers, control registers, and control logic for various interfaces, such as UARTs, IR/RF, I$^2$C, and JTAG. All the buffers and registers are memory mapped and individually managed by the ARM CPU. Interrupts are used to communicate between these interface modules and the ARM CPU.

The `AV310 has two general purpose timers which are user programmable. Both timers contain 16 bit counters with 16 bit pre-scalers, allowing for timing intervals of 25 ns to 106 seconds. Each timer, timer0 and timer1, has an associated set of control and status registers. These registers are defined in Table 19.

Table 19.

| Timer Control and Status Registers | | |
|---|---|---|
| Register | Read/Wr ite | Description |
| Name Tcrx | R/W | Timer Control Register |

Table 19.   (continued)

| Timer Control and Status Registers | | |
|---|---|---|
| Register | Read/Wr | Description |
|  |  | 31 - Reserved (set to 0) |
|  |  | 6     tint_mask |
|  |  | 5         0 = enable interrupts |
|  |  |             1 = mask interrupts |
|  |  |         reserved (set to 1) |
|  |  | 4     reserved |
|  |  | 3     soft - soft stop: |
|  |  | 2         0 = reload counters on 0 |
|  |  |             1 = stop timer on 0 |
|  |  | 1     tss - timer stop: |
|  |  |           0 = start |
|  |  |           1 = stop |
|  |  | 0     trb - timer reload |
|  |  |             0 = do not reload |
|  |  |             1 = reload the timer |
|  |  |         (read 0) |
| Tddrx | W | Timer Divide Down (15-0). Contains the value for the pre-scalar to preload psc during pre-scalar rollover. (Note: reading this register is equivalent to reading the prld register.) |
| Prdx | W | Timer Period Register (15-0). Contains the value for tim to preload during tim rollover. (Note: reading this register is equivalent to reading the tim32 register.) |
| Preldx | R | Preload Value. |
|  |  | 31 - Value of prd |
|  |  | 16     Value of tddr |
|  |  | 16 - |
|  |  | 0 |
| tim32x | R | Actual Time Value (31-0) |
|  |  | 31 - Value of tim |
|  |  | 16     Value of psc |
|  |  | 16 - |
|  |  | 0 |
| Note: x designates the timer number, 0 or 1. | | |

The timers are count-down timers composed of 2 counters: the timer pre-scaler, psc, which is pre-loaded from tddr and counts down every sys_clock; and the timer counter, tim, (pre-loaded from prd). When psc = 0, it pre-loads itself and decrements tim by one. This divides the sys_clock by the following values:

(tddr + 1) * (prd + 1), if tddr and prd are not both 0, or

2,        if tddr and prd are both 0.

When tim = 0 and psc = 0, the timer will issue an interrupt if the corresponding tint_mask is not set. Then both counters are pre-loaded if soft = 0. If soft is 1, the timer stops counting.

The timer control register (tcr) can override normal timer operations. The timer reload bit, trb, causes both counters to pre-load, while the timer stop bit, tss, causes both counters to stop.

The two general purpose 2-wire UARTs are asynchronous mode, full duplex, double buffered with 8 bytes FIFO UARTs that operate at up to 28.8 kbps. They transmit/receive 1 start bit, 7 or 8 data bits, optional parity, and 1 or 2 stop bits.

The UARTs are fully accessible to the API and can generate interrupts when data is received or the transmit buffer is empty. The ARM also has access to a status register for each UART that contains flags for such errors as data overrun and framing errors.

The IR/RF remote control interface is a means of transmitting user commands to the set top box. This interface consists of a custom hardware receiver implementing a bit frame-based communication protocol. A single bit frame represents a user command.

The bit frame is defined in three possible lengths of 12, 15 or 20 bits. The on/off values of the bits in the frame are represented by two different length pulse widths. A 'one' is represented by a pulse width of 1.2 ms and a 'zero' is represented by a 0.6 ms pulse width. The example in Figure 20 shows the IR input bitstream. The bitstream is assumed to be free of any carrier (36-48 KHz typical) and represents a purely digital bitstream in return-to-zero format. The hardware portion of this interface is responsible for determining the bit value along with capturing the bit stream and placing the captured value into a read register for the software interface to access. Each value placed in the read register will generate an interrupt request.

Each user command is transmitted as a single bit frame and each frame is transmitted a minimum of three times. The hardware interface is responsible for recognizing frames and filtering out unwanted frames. For a bit frame to be recognized by the hardware interface it must pass the following steps: first it must match the expected frame size, 12, 15 or 20 bits; then two of the minimum three frames received must match in value. A frame match when detected by the hardware interface will generate only one interrupt request.

The IR/RF protocol has one receive interrupt, but it is generated to indicate two different conditions. The two different conditions are start and finish of a user command. The first type of receive interrupt (start) is generated when the hardware interface detects a new frame (remember 2 out of three frames must match). The second type of interrupt is generated when there has been no signal detected for the length of a hardware time out period (user command time out). Each frame, when transmitted, is considered to be continuous or repeated. So although there is a three frame minimum for a user command the protocol is that when a start interrupt is received the interface will assume that until a finish (time out) interrupt is generated the same frame is being received.

A typical example of the receive sequence is to assume that the interface has been dormant and the hardware interface detects a signal that is recognized as a frame. This is considered the start of a user command, and a start interrupt is issued by the hardware interface. The finish of a user command is considered to be when there has not been a signal detected by the hardware interface for a time out period of approximately 100 ms. The finish will be indicated by an interrupt from the hardware interface.

During a receive sequence it is possible to receive several start interrupts before receiving a finish interrupt. Several start interrupts maybe caused by the user entering several commands before the time out period has expired. Each of these commands entered by the user would be a different command. A new user command can be accepted before the previous command time out.

The IR, SIRCSI, and RF inputs share common decoding logic. Figure 21 shows a theoretical model of the hardware interface. There are three possible inputs, SIRCSI, IR and RF, and one output, SIRCSO. The IR receiver receives its input from the remote control transmitter while the SIRCSI receives its input from another device's SIRCSO. Again, examining Figure 21 shows that normal operation will have the IR connected to the SIRCSO and the decoder. The SIRCSI signal has priority over the IR and will override any IR signal in progress. If a SIRCSI signal is detected, the hardware interface will switch the input stream from IR to SIRCSI and the SIRCSI will be routed to the decoder and the SIRCSO.

There are two possible inputs for the IR frame type and one input for the RF frame type. A selection must be made by the user if the received frame type is going to be IR or RF. The IR/RF interface contains two 32-bit data registers, one for received data (IRRF Data Decode register) and one for data to be written out (IRRF Encode Data register). In both registers, bits 31-20 are not used and are set to 0.

The `AV310 has two general purpose I/O pins (IO1 and IO2) which are user configurable. Each I/O port has its own 32-bit control/status register, iocsr1 or iocsr2.

If an I/O is configured as an input and the delta interrupt mask is cleared, an ARM interrupt is generated whenever an input changes state. If the delta interrupt mask is set, interrupts to the ARM are disabled. If no other device drives the I/O pin while it is configured as an input, it will be held high by an internal pull-up resistor.

If an I/O is configured as an output (by setting the cio bit in the corresponding control/status register), the value contained in the io_out bit of the control/status register is output. Interrupt generation is disabled when an I/O is configured as an output.

The definition of the control/status registers is given in Table 20.

Table 20.

| I/O Control/Status Registers | | |
|---|---|---|
| Bit Number | Name | Description |
| 31-4 | Reserved | Set to 0 (read only) |
| 3 | io_in | input sample value (read only) |
| 2 | dim | delta interrupt mask:<br>0 = generate interrupts<br>1 = mask interrupts |
| 1 | cio | configure i/o:<br>0 = input<br>1 = output |
| 0 | io_out | output value if cio is 1 |

The `AV310 includes an I$^2$C serial bus interface that can act as either a master or slave. (Master mode is the default). In master mode, the `AV310 initiates and terminates transfers and generates clock signals.

To put the device in slave mode, the ARM must write to a control register in the block. The API must set the slave mode select and a 7-bit address for the 'AV310. It must also send a software reset to the I2C to complete the transition to slave mode.

In slave mode, when the programmable address bits match the applied address, the 'AV310 will respond accordingly. The `AV310 will also respond to general call commands issued to address 0 (the general call address) that change the programmable part of the slave address. These commands are 0x04 and 0x06. No other general call commands will be acknowledged, and no action will be taken.

The circuitry is presently preferably packaged in a 240 pin PQFP. Table 21 is a list of pin signal names and their descriptions. Other pin outs may be employed to simplify the design of emulation, simulation, and/or software debugging platforms employing this circuitry.

Table 21.

| Signal Name | # | I/O | Description |
|---|---|---|---|
| Transport Parser | | | |
| DATAIN[7:0]* | 8 | I | Data Input. Bit 7 is the first bit in the transport stream |
| DCLK* | 1 | I | Data Clock. The maximum frequency is 7.5 MHz. |
| PACCLK* | 1 | I | Packet Clock. Indicates valid packet data on DATAIN. |
| BYTE_STRT* | 1 | I | Byte Start. Indicates the first byte of a transport packet for DVB. Tied low for DSS. |
| DERROR* | 1 | I | Data Error, active high. Indicates an error in the input data. Tie low if not used. |
| CLK27* | 1 | I | 27 MHz Clock input from an external VCXO. |
| VCXO_CTRL* | 1 | O | VCXO Control. Digital pulse output for external VCXO. |
| CLK_SEL | 1 | I | Clock select. CLK_SEL low selects a 27 MHz input clock. When high, selects an 81 MHz input clock. |
| Communication s Processor | | | |
| IR* | 1 | I | Infra-Red sensor input |
| RF* | 1 | I | RF sensor input |
| SIRCSI* | 1 | I | SIRCS control input |
| SIRCSO* | 1 | O | SIRCS control output |
| UARTDI1* | 1 | I | UART Data Input, port 1 |
| UARTDO1* | 1 | O | UART Data Output, port 1 |
| UARTDI2* | 1 | I | UART Data Input, port 2 |
| UARTDO2* | 1 | O | UART Data Output, port 2 |

* indicates a 5 volt tolerant pin

39

Table 21.   (continued)

| | | | |
|---|---|---|---|
| PDATA | 8 | I/O | 1394 Interface Data Bus |
| PWRITE | 1 | O | 1394 Interface Write Signal |
| PREAD | 1 | O | 1394 Interface Read Signal |
| PPACEN | 1 | I/O | 1394 Interface Packet Data Enable |
| PREADREQ | 1 | I | 1394 Interface Read Data Request |
| PERROR | 1 | I/O | 1394 Interface Error Flag |
| IIC_SDA* | 1 | I/O | I²C Interface Serial Data |
| IIC_SCL* | 1 | I/O | I²C Interface Serial Clock |
| IO1* | 1 | I/O | General Purpose I/O |
| IO2* | 1 | I/O | General Purpose I/O |
| Extension Bus EXTR/W | 1 | O | Extension Bus Read/Write. Selects read when high, write when low. |
| EXTWAIT | 1 | I | Extension Bus Wait Request, active low, open drain |
| EXTADDR[24:0] | 25 | O | Extension Address bus: byte address |
| EXTDATA[15:0] | 16 | I/O | Extension Data bus |
| EXTINT[2:0] | 3 | I | External Interrupt requests (three) |
| EXTACK[2:0] | 3 | O | External Interrupt acknowledges (three) |
| CLK40 | 1 | O | 40.5 MHz Clock output for extension bus and 1394 interface |
| CS1 | 1 | O | Chip Select 1. Selects EEPROM, 32M byte maximum size. |
| CS2 | 1 | O | Chip Select 2. Selects external DRAM. |
| CS3 | 1 | O | Chip Select 3. Selects the modem. |
| CS4 | 1 | O | Chip Select 4. Selects the front panel. |
| CS5 | 1 | O | Chip Select 5. Selects front end control. |
| CS6 | 1 | O | Chip Select 6. Selects the 1394 interface. |
| CS7 | 1 | O | Chip Select 7. Selects the parallel data port. |
| RAS | 1 | O | DRAM Row Address Strobe |
| UCAS | 1 | O | DRAM Column address strobe for upper byte |
| LCAS | 1 | O | DRAM Column address strobe for lower byte |
| SMIO | 1 | I/O | Smart Card Input/Output |
| SMCLK | 1 | O | Smart Card Output Clock |
| SMCLK2 | 1 | I | Smart Card Input Clock, 36.8 MHz |
| SMDETECT | 1 | I | Smart Card Detect, active low |
| SMRST | 1 | O | Smart Card Reset |
| SMVPPEN | 1 | O | Smart Card Vpp enable |
| SMVCCDETECT* | 1 | I | Smart Card Vcc detect. Signals whether the Smart Card Vcc is on. |
| SMVCCEN | 1 | O | Smart Card Vcc enable |
| Audio Interface AUD_PLLI* | 1 | I | Input Clock for Audio PLL |
| AUD_PLLO | 1 | O | Control Voltage for external filter of Audio PLL |
| PCM_SRC | 1 | I | =PCM Clock Source Select. Indicates whether the PCM clock is input to or generated by the `AV310. |

* indicates a 5 volt tolerant pin

Table 21. (continued)

| | | | |
|---|---|---|---|
| PCMDATA* | 1 | O | PCM Data audio output. |
| LRCLK* | 1 | O | Left/Right Clock for output PCM audio data. |
| PCMCLK* | 1 | I or O | PCM Clock. |
| ASCLK* | 1 | O | Audio Serial Data Clock |
| SPDIF* | 1 | O | SPDIF audio output |
| Digital Video Interface YCOUT[7:0] | 8 | O | 4:2:2 or 4:4:4 digital video output |
| YCCLK | 1 | O | 27 or 40.5 MHz digital video output clock |
| YCCTRL[1:0] | 2 | O | Digital video output control signal |
| NTSC/PAL Encoder Interface NTSC/PAL | 1 | I | NTSC/PAL select. Selects NTSC output when high, PAL output when low. |
| SYNCSEL | 1 | I | Sync signal select. When low, selects internal sync generation. When high, VSYNC and HSYNC are inputs. |
| VSYNC | 1 | I or O | Vertical synchronization signal |
| HSYNC | 1 | I or O | Horizontal synchronization signal |
| YOUT | 1 | O | Y signal Output |
| BIASY | 1 | I | Y D/A Bias-capacitor terminal |
| COUT | 1 | O | C signal Output |
| BIASC | 1 | I | C D/A Bias-capacitor terminal |
| COMPOUT | 1 | O | Composite signal Output |
| BIASCOMP | 1 | I | Composite Bias-capacitor terminal |
| IREF | 1 | I | Reference-current input |
| COMP | 1 | I | Compensation-capacitor terminal |
| VREF | 1 | I | Voltage reference |
| SDRAM Interface SDATA[15:0] | 16 | I/O | SDRAM Data bus. |
| SADDR[11:0] | 12 | O | SDRAM Address bus. |
| SRAS | 1 | O | SDRAM Row Address Strobe |
| SCAS | 1 | O | SDRAM Column Address Strobe |
| SWE | 1 | O | SDRAM Write Enable |
| SDOMU | 1 | O | SDRAM Data Mask Enable, Upper byte. |
| SDOML | 1 | O | SDRAM Data Mask Enable, Lower byte. |
| SCLK | 1 | O | SDRAM Clock |
| SCKE | 1 | O | SDRAM Clock Enable |
| SCS1 | 1 | O | SDRAM Chip Select 1 |
| SCS2 | 1 | O | SDRAM Chip Select 2 |
| Device Control: RESET* | 1 | I | Reset, active low |
| TDI* | 1 | I | JTAG Data Input. Can be tied high or left floating. |
| TCK* | 1 | I | JTAG Clock. Must be tied low for normal operation. |
| TMS* | 1 | I | JTAG Test Mode Select Can be tied high or left floating. |
| TRST* | 1 | I | JTAG Test Reset, active low. Must be tied low or connected to RESET for normal operations. |
| TDO* | 1 | O | JTAG Data Output |

* indicates a 5 volt tolerant pin

Table 21.   (continued)

| Reserved | 3 | | Reserved for Test |
|---|---|---|---|
| VCC / GND | 10 | | Analog supply |
| VCC / GND | 44 | | Digital supply |

Fabrication of data processing device 1000 and 2000 involves multiple steps of implanting various amounts of impurities into a semiconductor substrate and diffusing the impurities to selected depths within the substrate to form transistor devices. Masks are formed to control the placement of the impurities. Multiple layers of conductive material and insulative material are deposited and etched to interconnect the various devices. These steps are performed in a clean room environment.

A significant portion of the cost of producing the data processing device involves testing. While in wafer form, individual devices are biased to an operational state and probe tested for basic operational functionality. The wafer is then separated into individual dice which may be sold as bare die or packaged. After packaging, finished parts are biased into an operational state and tested for operational functionality.

An alternative embodiment of the novel aspects of the present invention may include other circuitries, which are combined with the circuitries disclosed herein in order to reduce the total gate count of the combined functions. Since those skilled in the art are aware of techniques for gate minimization, the details of such an embodiment will not be described herein.

As used herein, the terms "applied," "connected," and "connection" mean electrically connected, including where additional elements may be in the electrical connection path.

While the invention has been described with reference to illustrative embodiments, this description is not intended to be construed in a limiting sense. Various other embodiments of the invention will be apparent to persons skilled in the art upon reference to this description. It is therefore contemplated that the appended claims will cover any such modifications of the embodiments as fall within the true scope and spirit of the invention.

## Claims

1.   A method of decoding video containing predicted frames, comprising the steps of:

(a) decoding a macroblock at either a first resolution or a second resolution depending upon assessment of said macroblock.

2.   The method of claim 1, wherein:

(a) said macroblock has an associated motion vector.

FIG. 1

EP 0 964 583 A2

TRANSPORT
BITSTREAM FROM
FRONT END

EXTERNAL
SYSTEM
MEMORY

DIGITAL VIDEO
OUTPUT

Y, C, AND
COMPOSIT
VIDEO OUTPUT

DES

OSD

NTSC/PAL
ENCODER

TPP

TRAFFIC
CONTROLLER

VIDEO DECODER

1394
DATA PORT

PCM AUDIO
OUTPUT

AUDIO DECODER

SPDIF OUTPUT

COMM
PROCESSOR

EXTENSION
BUS
INTERFACE

ARM/THUMB

RAM

ROM

I2C

SMART CARD

UART (TWO)

JTAG

IR/RF/SIRCS

FIG. 2

95 ns
min

95 ns
min

DCLK

200 ns min

PACCLK

26000 ns min

DATAIN

0

1

128

129

DERROR

FIG. 3

44

*FIG. 4*

4:2:2 MODE

4:4:4 MODE

*FIG. 5*

*FIG. 6*

FIG. 7

FIG. 8

FIG. 9

**FIG. 10**

**FIG. 11**

**FIG. 12**

FIG. 13

FIG. 14

FIG. 15

FIG. 16

FIG. 17

FIG. 18

| CH 1 NTSC/PAL ENCODER OUTPUTS / CH 2 DIGITAL VIDEO OUTPUT | VIDEO ONLY | FULL OSD PICTURE | NON-OVERLAPPED OSD | BOTTOM OF OVERLAPPED OSD |
|---|---|---|---|---|
| VIDEO ONLY | YES | YES | YES | YES |
| FULL OSD PICTURE | YES | YES | YES | NO |
| NON-OVERLAPPED OSD | YES | YES | YES | NO |
| TOP OF OVERLAPPED OSD | YES | YES | YES | NO |

*FIG. 19*

*FIG. 20*

*FIG. 21*

990   1000        2000        3000

HDTV MPEG → | HDTV TO SDTV | → | SDTV DECODER | → | SDTV |    *FIG. 22*

(A) MPEG TRANSPORT STREAM WITH
HIGH DEFINITION TV VIDEO DATA

1010 — | PARSE |

MPEG VIDEO STREAM

1011 — | FIND HEADER |    EDIT HEADER

MACRO BLOCKS-1920X1050 4:2:0

1012 — | VLD (VARIABLE LENGTH DECODE) |

1013 — | DOWNSAMPLE |    4:1 LUMINANCE (2:1X2:1)
2:1 CHROMANANCE

1014 — | VLC (VARIABLE LENGTH CODE) |

1015 — | RECONSTRUCT MARCOBLOCK |    960X540
4:2:2

EDITED HEADER

1016 — | RECONSTRUCT VIDEO STREAM |

AUDIO STREAM    *FIG. 23A*

1017 — | RECONSTRUCT TRANSPORT STREAM |

(B) MPEG TRANSPORT STREAM WITH STANDARD
DEFINITION TV VIDEO DATA (960X540)

(B)

| MPEG DECODE REFORMAT FOR DISPLAY |    *FIG. 23B*

STANDARD DEFINITION
(C) TO NTSC (720X480)

| 720X480 |

*FIG. 24*

FIG. 25

*FIG. 26*

LUMINANCE DOWNSAMPLING FUNCTIONAL EQUIVALENT

16X16 BLOCK
SPATIAL DOMAIN

↓ 16X16 IDCT

16X16 BLOCK
FREQUENCY DOMAIN

↓ FILTERING (KEEP UPPER-LEFT 8X8)

8X8 BLOCK FREQUENCY DOMAIN
$A_{ij}=f(B_{ij}, C_{ij}, D_{ij}, E_{ij})$ $i,j=0,1,...,7$

FIG. 27a

HDTV BITSTREAM
$IPB_1B_2$ $PB_1B_2$

FIG. 28

⑤ Chrominance Down Sampling & Repacking

a Downsampling (filtering):

b Repacking:

Purpose of repacking is to prepare data in such a way that a 8×8 IDCT would recover b & c directly.

Fig. 27b

FUNCTIONAL BLOCK DIAGRAM OF THE TRANSCODER CHIP

*FIG. 29*

For (J=0; J < number of MBs; J++)

**MB(J) needs to be fixed?**

Yes → Full resolution decode MB(J)
- motion comp image
- inverse DCT on residual DCT
- add residual to motion comp image

Spatial domain downsample

Convert to intra MB

No → $MV^\circ(J) = MV(J)/2$

residual $DCT^\circ(J) =$ DCT domain downsampled of residual DCT(J)

Reduced resolution decode
- motion comp with $MV^\circ(J)$
- inverse DCT on $DCT^\circ(J)$
- add residual to motion comp image

Store as full resolution MB

Store as reduced resolution MB

Memory

Full resolution MBs     Reduced resolution MBs     Table

Output fixed MB

Output not fixed MB

MPEG BITSTREAM

AV 7xx, AV 3xx

Fig. 30a

For (J=0; J < number of MBs; J++)

MB(J)
needs to be fixed?

Yes

No

MV*(J) = MV(J)/2

Full resolution decode MB(J)
– motion comp image
– inverse DCT on residual DCT
– add residual to
        motion comp image

residual DCT*(J) =
    DCT domain downsampled
    of residual DCT(J)

Reduced resolution decode
–motion comp with MV*(J)
–inverse DCT on DCT*(J)
–add residual to
        motion comp image

Spatial domain
downsample

Store as full
resolution MB

Store as reduced
resolution MB

Memory

| Full resolution MBs | Reduced resolution MBs | Table |
|---|---|---|

Output in spatial domain

Fig. 30 b

Motion compensation

Is reference MB stored at
full resolution (Table)

Yes

No

Upsample reduced resolution
target MB

Motion compensation
−full resolution MV
−stored full resolution MB

Motion compensation
−full resolution Mv
−upsampled MB

Fig. 30c

Fig. 31

**Generic Data Flow of Transcoder**

Fig 32a

**Transcoder Option 1: utilizing existing SDTV MPEG decoder**

Fig. 32b

**Transcoder Option 2: direct decoding**

Fig. 32c

**Transcoder Option 3; combination of options 1 and 2**

Fig. 32d

| | | |
|---|---|---|
| 1 | 2 | 3 |
| 4 c | 5 | d 6 |
| 7 | 8 | 9 |

a

b

8×8

16×16

8×8

Fig. 33